(19) Europäisches Patentamt / European Patent Office / Office européen des brevets

(11) **EP 4 022 756 B1**

(12) **EUROPEAN PATENT SPECIFICATION**

(45) Date of publication and mention
of the grant of the patent:
**26.06.2024  Bulletin 2024/26**

(21) Application number: **19773667.1**

(22) Date of filing: **11.09.2019**

(51) International Patent Classification (IPC):
*H02M 3/07* (2006.01)      *H02M 1/00* (2006.01)
*H02M 3/158* (2006.01)     *H02M 3/00* (2006.01)
*H02M 7/487* (2007.01)

(52) Cooperative Patent Classification (CPC):
**H02M 3/07; H02M 7/487;** H02M 1/007;
H02M 3/072; H02M 3/1586

(86) International application number:
**PCT/US2019/050499**

(87) International publication number:
**WO 2020/112207 (04.06.2020 Gazette 2020/23)**

(54) **SWITCHED-CAPACITOR POWER CONVERSION SYSTEM AND CONTROL METHOD**

LEISTUNGSWANDLERSYSTEM MIT GESCHALTETEN KONDENSATOREN UND
STEUERUNGSVERFAHREN

SYSTÈME DE CONVERSION D'ALIMENTATION À CONDENSATEUR COMMUTÉ ET PROCÉDÉ
DE COMMANDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.07.2022  Bulletin 2022/27**

(73) Proprietor: **Huawei Digital Power Technologies
Co., Ltd.
Shenzhen, Guangdong 518043 (CN)**

(72) Inventors:
• **YE, Liming
Plano, Texas 75025 (US)**
• **DAI, Heping
Plano, Texas 75024 (US)**
• **FU, Dianbo
Frisco, Texas 75035 (US)**

(74) Representative: **Maiwald GmbH
Elisenhof
Elisenstraße 3
80335 München (DE)**

(56) References cited:
**EP-A1- 2 894 780      CN-A- 106 100 346
JP-A- 2013 055 830     US-A1- 2016 197 552
US-A1- 2017 244 318    US-A1- 2018 026 518
US-B1- 6 480 403**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present disclosure relates to a high efficiency switched-capacitor power conversion system, and, in particular embodiments, to a multi-stage switched-capacitor power conversion system.

BACKGROUND

As technologies further advance, a variety of electronic devices, such as mobile phones, tablet PCs, digital cameras, MP3 players and/or the like, have become popular. Each electronic device requires direct current (DC) power at a substantially constant voltage which may be regulated within a specified range even when the current drawn by the electronic device may vary over a wide range. When an input voltage is lower than the specific range, a step-up DC/DC converter may be employed to convert the input voltage into a regulated voltage within the specific range. On the other hand, when the input voltage is higher than the specific range, a step-down DC/DC converter may be used to convert the voltage of the input power source into a lower voltage to satisfy the operational voltage to which the electronic circuit is specified.

There may be a variety of DC/DC conversion topologies. In accordance with the topology difference, DC/DC converters can be divided into three categories, namely, switching DC/DC converters, linear regulators and switched-capacitor converters. In accordance with the voltage level difference, DC/DC converters can be divided into two categories, namely, two-level power converters and three-level power converters. Switched-capacitor converters are one type of three-level power converters.

As integrated circuits become increasingly advanced while shrinking in size at the same time, a compact and high efficiency DC/DC conversion topology is desirable. In comparison with other topologies, switched-capacitor converters are less complicated because the switched-capacitor converters are formed by a plurality of switches and a flying capacitor. In addition, the switched-capacitor converters have a small footprint and are capable of generating a high efficient power conversion by switching the flying capacitor between a charging phase and a discharging phase. As a result, the switched-capacitor converters can provide compact and efficient power for integrated circuits.

Switched-capacitor converters are capable of eliminating large redistribution currents amongst the switched capacitors at switching moments. As a result, much smaller capacitances are needed for the switched-capacitor converters. In addition, the inductor and the flying capacitor of a switched-capacitor converter form a resonant tank. This switched-capacitor converter can also reduce switching losses through zero current switching (ZCS) and/or zero voltage switching (ZVS).

US 6 480 403 B1 describes a device for converting alternating voltage to direct voltage and, conversely, direct voltage into alternating voltage. A series connection between the poles of a direct voltage side has at least four units each having a semiconductor element of turn-off type and a first diode connected in anti-parallel therewith. A first midpoint of the series connection is connected to an alternating voltage phase line and forms a phase output. Second midpoints of the series connection are connected to a midpoint of the direct voltage side through such units. An apparatus is adapted to control the semiconductor elements with a pulse width modulation frequency of at least one order of magnitude higher than the fundamental frequency of the alternating voltage of the phase line and the rest of the semiconductor elements with a frequency substantially lower and within or close to the frequency range of one or a couple of times of the fundamental frequency.

US 2017/0244318 A1 describes an apparatus for power conversion includes a transformation stage for transforming a first voltage into a second voltage. The transformation stage includes a switching network, a filter, and a controller. The filter is configured to connect the transformation stage to a regulator. The controller controls the switching network.

US 2016/0197552 A1 describes an apparatus for processing electric power includes a power-converter having a path for power flow between first and second power-converter terminals. During operation the first and second power-converter terminals are maintained at respective first and second voltages. Two regulating-circuits and a switching network are disposed on the path. The first regulating-circuit includes a magnetic-storage element and a first-regulating-circuit terminal. The second regulating-circuit includes a second-regulating-circuit terminal. The first-regulating-circuit terminal is connected to the first switching-network-terminal and the second-regulating-circuit terminal is connected to the second switching-network-terminal. The switching network is transitions between a first switch-configuration and a second switch-configuration. In the first switch-configuration, charge accumulates in the first charge-storage-element at a first rate. Conversely, in the second switch-configuration, charge is depleted from the first charge-storage-element at a second rate. These rates are constrained by the magnetic-storage element.

US 2018/0026518 A1 describes a multi-stage multilevel DC-DC step-down converters. Stages may include three or four switches, and switches of each stage are operated at selected duty cycles such that each stage reduces an input voltage by one-half and voltage stress on switches is reduced. In some embodiments only a single output inductor is used in an LC filter, and the inductor may be very small as compared with a conventional Buck converter. Thus, embodiments provide DC-DC step-down converters with high power density and efficiency.

SUMMARY

The invention is defined by the features of device claim 1 and method claim 4. The dependent claims recite advantageous embodiments of the invention.

BRIEF DESCRIPTION OF THE DRAWINGS

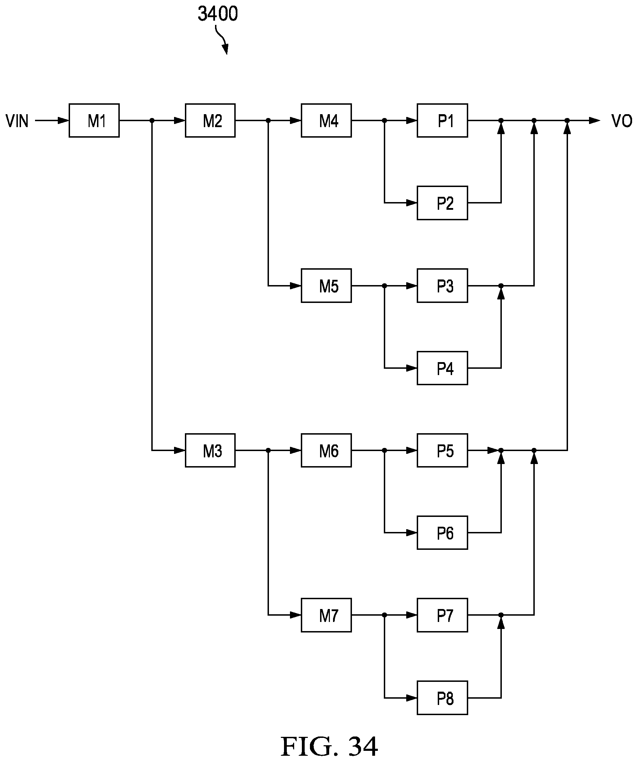

Out of the following embodiments, the embodiment shown in fig. 34 reflects the features of the independent claims. The other embodiments are, however, describing circuit parts and control schemes, which are considered as supportive for understanding the invention.

For a more complete understanding of the present disclosure, and the advantages thereof, reference is now made to the following descriptions taken in conjunction with the accompanying drawings, in which:

Figure 1 illustrates a block diagram of a first switched-capacitor power conversion system in accordance with various embodiments of the present disclosure;

Figure 2 illustrates a schematic diagram of the first switched-capacitor power converter shown in Figure 1 in accordance with various embodiments of the present disclosure;

Figure 3 illustrates a schematic diagram of the second switched-capacitor power converter shown in Figure 1 in accordance with various embodiments of the present disclosure;

Figure 4 illustrates a schematic diagram of the third switched-capacitor power converter shown in Figure 1 in accordance with various embodiments of the present disclosure;

Figure 5 illustrates a schematic diagram of the first switched-capacitor power conversion system shown in Figure 1 in accordance with various embodiments of the present disclosure;

Figure 6 illustrates a gate timing diagram of the first switched-capacitor power conversion system operating in a first operating mode in accordance with various embodiments of the present disclosure;

Figure 7 illustrates various waveforms of the first switched-capacitor power conversion system operating under the first operating mode in accordance with various embodiments of the present disclosure;

Figure 8 illustrates a gate timing diagram of the first switched-capacitor power conversion system operating in a second operating mode in accordance with various embodiments of the present disclosure;

Figure 9 illustrates various waveforms of the first switched-capacitor power conversion system operating in a second operating mode in accordance with various embodiments of the present disclosure;

Figure 10 illustrates three waveforms of the first switched-capacitor power conversion system operating in a second operating mode in accordance with various embodiments of the present disclosure;

Figure 11 illustrates another gate timing diagram of the first switched-capacitor power conversion system operating in the second operating mode in accordance with various embodiments of the present disclosure;

Figure 12 illustrates a gate timing diagram of the first switched-capacitor power conversion system operating in a third operating mode in accordance with various embodiments of the present disclosure;

Figure 13 illustrates another gate timing diagram of the first switched-capacitor power conversion system operating in the third operating mode in accordance with various embodiments of the present disclosure;

Figure 14 illustrates various waveforms of the first switched-capacitor power conversion system operating in the third operating mode in accordance with various embodiments of the present disclosure;

Figure 15 illustrates a gate timing diagram of the first switched-capacitor power conversion system operating in a fourth operating mode in accordance with various embodiments of the present disclosure;

Figure 16 illustrates another gate timing diagram of the first switched-capacitor power conversion system operating in the fourth operating mode in accordance with various embodiments of the present disclosure;

Figure 17 illustrates various waveforms of the first switched-capacitor power conversion system operating in the fourth operating mode in accordance with various embodiments of the present disclosure;

Figure 18 illustrates six waveforms of the first switched-capacitor power conversion system operating in the fourth operating mode in accordance with various embodiments of the present disclosure;

Figure 19 illustrates a block diagram of a second switched-capacitor power conversion system in accordance with various embodiments of the present disclosure;

Figure 20 illustrates a schematic diagram of the fourth switched-capacitor power converter shown in Figure 19 in accordance with various embodiments of the present disclosure;

Figure 21 illustrates a schematic diagram of the fifth switched-capacitor power converter shown in Figure 19 in accordance with various embodiments of the present disclosure;

Figure 22 illustrates a schematic diagram of the second switched-capacitor power conversion system shown in Figure 19 in accordance with various embodiments of the present disclosure;

Figure 23 illustrates various waveforms of the second switched-capacitor power conversion system operating in the second operating mode in accordance with various embodiments of the present disclosure;

Figure 24 illustrates three waveforms of the second switched-capacitor power conversion system operating in the second operating mode in accordance with various embodiments of the present disclosure;
Figure 25 illustrates three waveforms of the second switched-capacitor power conversion system operating in the third operating mode in accordance with various embodiments of the present disclosure;
Figure 26 illustrates a first power conversion unit of a multi-stage switched-capacitor power conversion system in accordance with various embodiments of the present disclosure;
Figure 27 illustrates a second power conversion unit of a multi-stage switched-capacitor power conversion system in accordance with various embodiments of the present disclosure;
Figure 28 illustrates a third power conversion unit of a multi-stage switched-capacitor power conversion system in accordance with various embodiments of the present disclosure;
Figure 29 illustrates a first two-stage switched-capacitor power conversion system in accordance with various embodiments of the present disclosure;
Figure 30 illustrates a second two-stage switched-capacitor power conversion system in accordance with various embodiments of the present disclosure;
Figure 31 illustrates a first three-stage switched-capacitor power conversion system in accordance with various embodiments of the present disclosure;
Figure 32 illustrates a second three-stage switched-capacitor power conversion system in accordance with various embodiments of the present disclosure;
Figure 33 illustrates a first four-stage switched-capacitor power conversion system in accordance with various embodiments of the present disclosure; and
Figure 34 illustrates a second four-stage switched-capacitor power conversion system in accordance with various embodiments of the present disclosure.

Corresponding numerals and symbols in the different figures generally refer to corresponding parts unless otherwise indicated. The figures are drawn to clearly illustrate the relevant aspects of the various embodiments and are not necessarily drawn to scale.

DETAILED DESCRIPTION OF ILLUSTRATIVE EMBODIMENTS

The making and using of the presently preferred embodiments are discussed in detail below. It should be appreciated, however, that the present disclosure provides many applicable inventive concepts that can be embodied in a wide variety of specific contexts. The specific embodiments discussed are merely illustrative of specific ways to make and use the disclosure, and do not limit the scope of the disclosure.

The present disclosure will be described with respect to preferred embodiments in a specific context, namely a high efficiency switched-capacitor power conversion system. The present disclosure may also be applied, however, to a variety of power conversion systems. Hereinafter, various embodiments will be explained in detail with reference to the accompanying drawings.

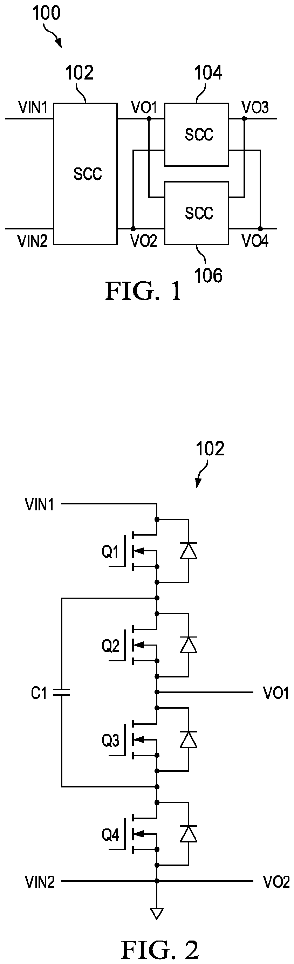

Figure 1 illustrates a block diagram of a first switched-capacitor power conversion system in accordance with various embodiments of the present disclosure. The first switched-capacitor power conversion system 100 is a two-stage switched-capacitor power conversion system. A first stage of the first switched-capacitor power conversion system 100 is implemented as a first switched-capacitor power converter (SCC) 102. The first switched-capacitor power converter 102 has a first input terminal connected to a firs input voltage bus VIN1 and a second input terminal connected to a second input voltage bus VIN2. The first switched-capacitor power converter 102 comprises a plurality of switches connected in series between VIN1 and VIN2. The first switched-capacitor power converter 102 further comprises a first flying capacitor. The detailed structure of the first switched-capacitor power converter 102 will be described below with respect to Figure 2.

A second stage of the first switched-capacitor power conversion system 100 comprises a second switched-capacitor power converter (SCC) 104 and a third switched-capacitor power converter (SCC) 106 connected in parallel. As shown in Figure 1, a first input terminal of the second switched-capacitor power converter 104 is connected to a first input terminal of the third switched-capacitor power converter 106 and further connected to a first output voltage bus VO1 of the first switched-capacitor power converter 102. Likewise, a second input terminal of the second switched-capacitor power converter 104 is connected to a second input terminal of the third switched-capacitor power converter 106 and further connected to a second output voltage bus VO2 of the first switched-capacitor power converter 102.

As shown in Figure 1, a first output terminal of the second switched-capacitor power converter 104 is connected to a first output terminal of the third switched-capacitor power converter 106 and further connected to a third output voltage bus VO3. Likewise, a second output terminal of the second switched-capacitor power converter 104 is connected to a second output terminal of the third switched-capacitor power converter 106 and further connected to a fourth output voltage bus VO4.

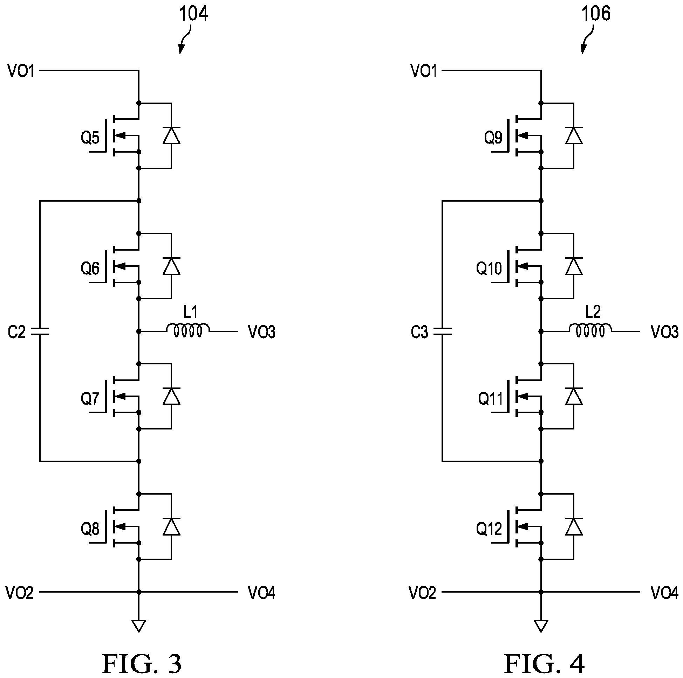

The second switched-capacitor power converter 104 comprises a plurality of switches connected in series between VO1 and VO2. The second switched-capacitor power converter 104 further comprises a second flying capacitor and a first inductor. The detailed structure of the second switched-capacitor power converter 104 will be described below with respect to Figure 3.

The third switched-capacitor power converter 106 comprises a plurality of switches connected in series between VO1 and VO2. The third switched-capacitor power converter 106 further comprises a third flying capacitor and a second inductor. The detailed structure of the third switched-capacitor power converter 106 will be described below with respect to Figure 4.

In some embodiments, the first switched-capacitor power converter 102 is configured as a first 2:1 power conversion apparatus. The second switched-capacitor power converter 104 is configured as a second 2:1 power conversion apparatus. The third switched-capacitor power converter 106 is configured as a third 2:1 power conversion apparatus.

In some embodiments, the first input voltage bus VIN2, the second output voltage bus VO2 and the fourth output voltage bus VO4 are connected together and further connected to ground. The first switched-capacitor power converter 102 is a 2:1 power conversion apparatus. The voltage on the first output voltage bus VO1 is equal to one half of the voltage on the first input voltage bus VIN1. Likewise, because the second switched-capacitor power converter 104 and the third switched-capacitor power converter 106 are 2:1 power conversion apparatuses, the voltage on the third output voltage bus VO3 is equal to one half of the voltage on the first output voltage bus VO1. The first switched-capacitor power conversion system 100 is a 4:1 power conversion system. In other words, the voltage on the third output voltage bus VO3 is equal to one fourth of the voltage on the first input voltage bus VIN1.

In operation, the first switched-capacitor power conversion system 100 may operate in a variety of operating modes. In a first operating mode, the first switched-capacitor power converter 102, the second switched-capacitor power converter 104 and the third switched-capacitor power converter 106 are configured to operate at a same switching frequency. The first switched-capacitor power converter 102, the second switched-capacitor power converter 104 and the third switched-capacitor power converter 106 are configured to operate at a same duty cycle. In some embodiments, the duty cycle is equal to 50%. Furthermore, the second switched-capacitor power converter 104 and the third switched-capacitor power converter 106 operate at 180 degrees out of phase from one another.

In a second operating mode, the first switched-capacitor power converter 102, the second switched-capacitor power converter 104 and the third switched-capacitor power converter 106 are configured to operate at a same switching frequency. The first switched-capacitor power converter 102 is configured to operate at a first duty cycle. The second switched-capacitor power converter 104 and the third switched-capacitor power converter 106 are configured to operate at a second duty cycle. In some embodiments, the second duty cycle is equal to 50%. The first duty cycle is less than the second duty cycle. Furthermore, the second switched-capacitor power converter 104 and the third switched-capacitor power converter 106 operate at 180 degrees out of phase from one another.

In a third operating mode, the first switched-capacitor power converter 102, the second switched-capacitor power converter 104 and the third switched-capacitor power converter 106 are configured to operate at two different switching frequencies. The first switched-capacitor power converter 102 operates at a first switching frequency. The second switched-capacitor power converter 104 and the third switched-capacitor power converter 106 operate at a second switching frequency. In some embodiments, the first switching frequency is twice the second switching frequency. The first switched-capacitor power converter 102, the second switched-capacitor power converter 104 and the third switched-capacitor power converter 106 are configured to operate at a same duty cycle. In some embodiments, the duty cycle is equal to 50%. Furthermore, the second switched-capacitor power converter 104 and the third switched-capacitor power converter 106 operate at 180 degrees out of phase from one another.

In a fourth operating mode, the first switched-capacitor power converter 102, the second switched-capacitor power converter 104 and the third switched-capacitor power converter 106 are configured to operate at two different switching frequencies. The first switched-capacitor power converter 102 operates at a first switching frequency. The second switched-capacitor power converter 104 and the third switched-capacitor power converter 106 operate at a second switching frequency. In some embodiments, the second switching frequency is three times the first switching frequency. The first switched-capacitor power converter 102, the second switched-capacitor power converter 104 and the third switched-capacitor power converter 106 are configured to operate at a same duty cycle. In some embodiments, the duty cycle is equal to 50%. Furthermore, the second switched-capacitor power converter 104 and the third switched-capacitor power converter 106 operate at 180 degrees out of phase from one another. Depending on various application and environmental variations, the phase shift between the second switched-capacitor power converter 104 and the third switched-capacitor power converter 106 under four operating modes described above may be equal to about 180 degrees. It should be appreciated that devices covered by the claims may exhibit non-ideal performance and therefore exhibit non-ideal performance characteristics. As an example, switched-capacitor converters configured to operate at approximately 180 degrees out of phase from one another may operate within an acceptable range of from about 179 degrees to about 181 degrees depending on various application and environmental variations.

It should be noted that by swapping the input port and the output port shown in Figure 1, the first switched-capacitor power conversion system 100 can be configured as step-up switched-capacitor power conversion system.

Figure 2 illustrates a schematic diagram of the first switched-capacitor power converter shown in Figure 1 in accordance with various embodiments of the present disclosure. The first switched-capacitor power converter 102 comprises a first switch Q1, a second switch Q2, a third switch Q3, a fourth switch Q4 and a capacitor C1. As shown in Figure 2, the common node of the second switch Q2 and the third switch Q3 is the first output voltage bus VO1. The second input voltage bus VIN2 and the second output voltage bus VO2 are connected together and further connected to ground.

The first switch Q1, the second switch Q2, the third switch Q3 and the fourth switch Q4 are connected in series between the first input voltage bus VIN1 and ground. In some embodiments, the capacitor C1 functions as a flying capacitor. Throughout the description, the capacitor C1 is alternatively referred to as a first flying capacitor C1.

In accordance with an embodiment, the switches (e.g., switches Q1-Q4) may be metal oxide semiconductor field-effect transistor (MOSFET) devices. Alternatively, the switching element can be any controllable switches such as insulated gate bipolar transistor (IGBT) devices, integrated gate commutated thyristor (IGCT) devices, gate turn-off thyristor (GTO) devices, silicon controlled rectifier (SCR) devices, junction gate field-effect transistor (JFET) devices, MOS controlled thyristor (MCT) devices and the like.

It should be noted while Figure 2 shows the switches Q1-Q4 are implemented as single n-type transistors, a person skilled in the art would recognize there may be many variations, modifications and alternatives. For example, depending on different applications and design needs, the switches Q1-Q4 may be implemented as p-type transistors. Furthermore, each switch shown in Figure 2 may be implemented as a plurality of switches connected in parallel. Moreover, a capacitor may be connected in parallel with one switch to achieve zero voltage switching (ZVS)/zero current switching (ZCS).

Figure 3 illustrates a schematic diagram of the second switched-capacitor power converter shown in Figure 1 in accordance with various embodiments of the present disclosure. As shown in Figure 3, the second switched-capacitor power converter 104 comprises switches Q5, Q6, Q7 and Q8 connected in series between the first output voltage bus VO1 and ground. A second flying capacitor C2 is connected between a common node of switches Q5, Q6, and a common node of switches Q7, Q8. The second switched-capacitor power converter 104 is similar to the first switched-capacitor power converter 102 except that an inductor L1 is connected to a common node of switches Q6 and Q7 as shown in Figure 3.

Figure 4 illustrates a schematic diagram of the third switched-capacitor power converter shown in Figure 1 in accordance with various embodiments of the present disclosure. As shown in Figure 4, the third switched-capacitor power converter 106 comprises switches Q9, Q10, Q11 and Q12 connected in series between the first output voltage bus VO1 and ground. A third flying capacitor C3 is connected between a common node of switches Q9, Q10, and a common node of switches Q11, Q12. The third switched-capacitor power converter 106 is similar to the first switched-capacitor power converter 102 except that an inductor L2 is connected to a common node of switches Q10 and Q11 as shown in Figure 4.

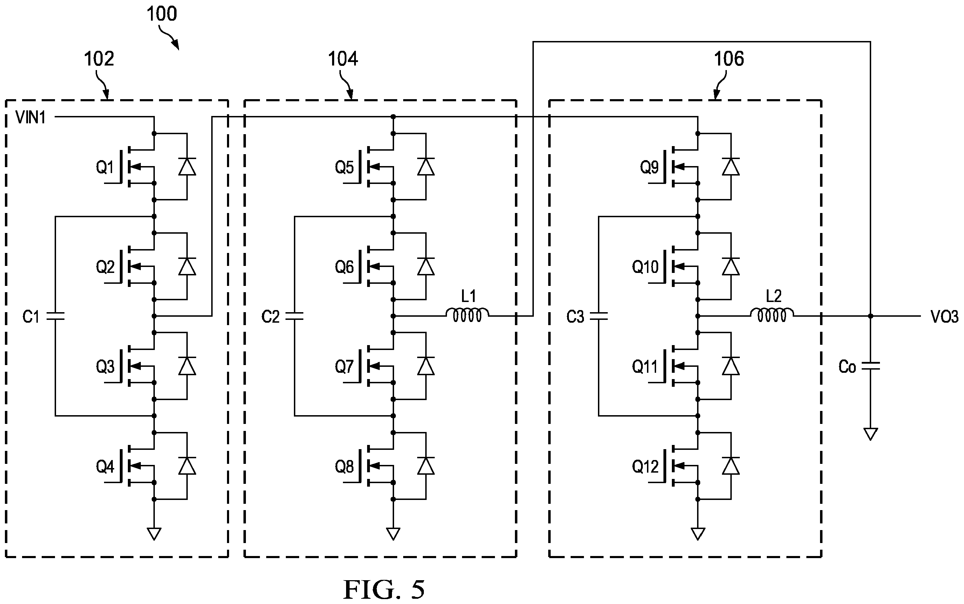

Figure 5 illustrates a schematic diagram of the first switched-capacitor power conversion system shown in Figure 1 in accordance with various embodiments of the present disclosure. The first switched-capacitor power conversion system 100 comprises two power conversion stages connected in cascade between the first input voltage bus VIN1 and the third output voltage bus VO3. The first power conversion stage comprises the first switched-capacitor power converter 102. The second power conversion stage comprises the second switched-capacitor power converter 104 and the third switched-capacitor power converter 106 connected in parallel between the output of the first power conversion stage and the output (VO3) of the first switched-capacitor power conversion system 100. An output capacitor Co is connected between VO3 and ground. The output capacitor Co, the inductor L1 and the inductor L2 form two output filters connected in parallel.

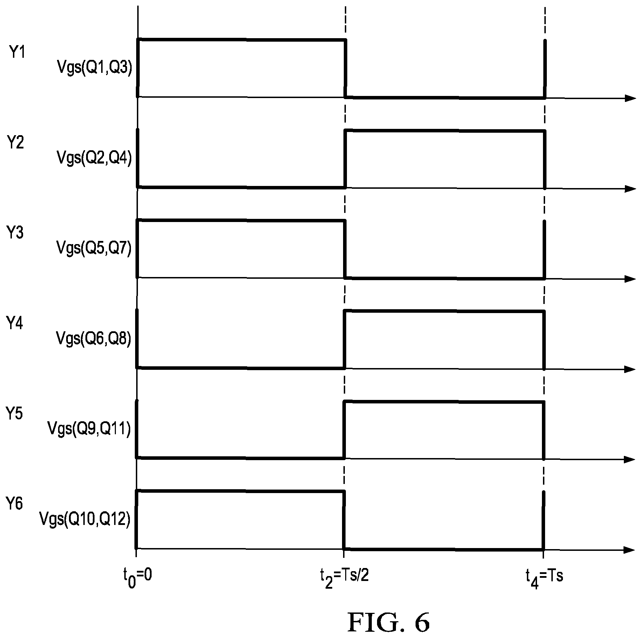

In operation, the first switched-capacitor power conversion system 100 may operate in a variety of operating modes. The control mechanisms of the variety of operating modes will be described below with respect to Figures 6-18.

Figure 6 illustrates a gate timing diagram of the first switched-capacitor power conversion system operating in a first operating mode in accordance with various embodiments of the present disclosure. The horizontal axis of Figure 6 represents intervals of time. There are six vertical axes. The first vertical axis Y1 represents the gate drive signals of switches Q1 and Q3. The second vertical axis Y2 represents the gate drive signals of switches Q2 and Q4. The third vertical axis Y3 represents the gate drive signals of switches Q5 and Q7. The four vertical axis Y4 represents the gate drive signals of switches Q6 and Q8. The fifth vertical axis Y5 represents the gate drive signals of switches Q9 and Q11. The sixth vertical axis Y6 represents the gate drive signals of switches Q10 and Q12.

One switching cycle of the first switched-capacitor power conversion system 100 can be divided into two phases as shown in Figure 6. A first phase is from 0 to Ts/2 where Ts is the switching cycle of the first switched-capacitor power conversion system 100. A second phase is from Ts/2 to Ts.

As shown in Figure 6, the duty cycle of switches Q1 and Q3 is equal to 50%. Likewise, switches Q2, Q4 and Q5-Q12 have a duty cycle equal to 50%. In the first switched-capacitor power converter 102, the gate drive signal of switches Q1 and Q3 is complementary to the gate drive signal of switches Q2 and Q4. Likewise, in the second switched-capacitor power converter 104, the gate drive signal of switches Q5 and Q7 is complementary to the gate drive signal of switches Q6 and Q8. In the third switched-capacitor power converter 106, the gate drive signal of switches Q9 and Q11 is complementary to the gate drive signal of switches Q10 and Q12. The gate drive signals of the second switched-capacitor power converter 104 and the gate drive signals of the third switched-capacitor power converter 106 are 180 degrees out of phase from one another as shown in Figure 6.

Furthermore, the leading edges of the gate drive signals of Q1, Q3, the gate drive signals of Q5, Q7 and the gate drive signals of Q10, Q12 are vertically aligned from each other. Likewise, the leading edges of the gate drive signals of Q2, Q4, the gate drive signals of Q6, Q8 and the gate drive signals of Q9, Q11 are vertically aligned from each other.

During the first phase, switches Q2, Q4, Q6, Q8, Q9 and Q11 are turned off. Switches Q1, Q3, Q5, Q7, Q10 and Q12 are turned on as shown in Figure 6. As a result of turning on switches Q1, Q3, Q5, Q7, Q10 and Q12, two conductive paths are established. A first conductive path is formed by switch Q1, the first flying capacitor C1, switch Q3, switch Q5, the second flying capacitor C2, switch Q7 and inductor L1. The input power source charges flying capacitors C1, C2 and the output VO3 through the first conductive path. In some embodiments, the capacitance of the output capacitor Co is much greater than that of the second flying capacitor C2. The resonant tank of the first conductive path is formed by the first flying capacitor C1, the second flying capacitor C2 and inductor L1 connected in series. The resonant frequency (fr1) of this resonant tank can be expressed by the following equation:

$$fr1 = \frac{1}{2\pi\sqrt{L1\cdot\left(\frac{C1\cdot C2}{C1+C2}\right)}} \qquad (1)$$

In some embodiments, , the capacitance of the output capacitor Co is much greater than that of the first flying capacitor C1, and the capacitance of the first flying capacitor C1 is much greater than that of the second flying capacitor C2 (Co » C1 » C2). Equation (1) can be simplified as:

$$fr1 \cong \frac{1}{2\pi\sqrt{L1\cdot C2}} \qquad (2)$$

In the first phase, a second conductive path is formed by inductor L2, switch Q10, the third flying capacitor C3 and switch Q12. The energy stored in the third flying capacitor C3 is used to charge the output VO3 through the second conductive path. In some embodiments, the capacitance of the output capacitor Co is much greater than that of the third flying capacitor C3. The resonant tank of the second conductive path is formed by the third flying capacitor C3 and inductor L2 connected in series. The resonant frequency (fr2) of this resonant tank can be expressed by the following equation:

$$fr2 = \frac{1}{2\pi\sqrt{L2\cdot C3}} \qquad (3)$$

In operation, the gate drive signals of switch Q1-Q12 are symmetrical. As a result of having symmetrical gate drive signals, the voltages across the flying capacitors C1, C2 and C3 can be maintained balanced. In some embodiments, the input voltage of the first switched-capacitor power conversion system 100 is defined as Vin. The dc voltages of the flying capacitors can be expressed by the following equations:

$$Vdc(C1) = Vin/2 \qquad (4)$$

$$Vdc(C2) = Vin/4 \qquad (5)$$

$$Vdc(C3) = Vin/4 \qquad (6)$$

In the second phase, switches Q1, Q3, Q5, Q7, Q10 and Q12 are turned off. Switches Q2, Q4, Q6, Q8, Q9 and Q11 are turned on as shown in Figure 6. As a result of turning on switches Q2, Q4, Q6, Q8, Q9 and Q11, two conductive paths are established. A first conductive path is formed by switch Q4, the first flying capacitor C1, switch Q2, switch Q9, the third flying capacitor C3, switch Q11 and inductor L2. The energy stored in the first flying capacitor C1 is released to charge the third flying capacitor C3 and the output VO3 through the first conductive path. In some embodiments, the capacitance of the output capacitor Co is much greater than that of the third flying capacitor C3. The resonant tank of the second conductive path is formed by the first flying capacitor C1, the third flying capacitor C3 and inductor L2 connected in series. The resonant frequency (fr3) of this resonant tank can be expressed by the following equation:

$$fr3 = \frac{1}{2\pi\sqrt{L2\cdot\left(\frac{C1\cdot C3}{C1+C3}\right)}} \qquad (7)$$

In some embodiments, the capacitance of the output capacitor Co is much greater than that of the first flying capacitor C1, and the capacitance of the first flying capacitor C1 is much greater than that of the third flying capacitor C3 (Co » C1 » C3). Equation (7) can be simplified as:

$$fr3 \cong \frac{1}{2\pi\sqrt{L2\cdot C3}} \qquad (8)$$

In the second phase, a second conductive path is formed by inductor L1, switch Q6, the second flying capacitor C2 and switch Q8. The energy stored in the second flying capacitor C2 is used to charge the output VO3 through the second conductive path. In some embodiments, the capacitance of the output capacitor Co is much greater than that of the second flying capacitor C2. The resonant tank of the second conductive path is formed by the second flying capacitor C2 and inductor L1 connected in series. The resonant frequency (fr4) of this resonant tank can be expressed by the following equation:

$$fr4 = \frac{1}{2\pi\sqrt{L1 \cdot C2}} \qquad (9)$$

The resonant frequencies of the first switched-capacitor power conversion system 100 can be summarized as:

$$fr1 \cong \frac{1}{2\pi\sqrt{L1 \cdot C2}} \qquad (10)$$

$$fr2 = \frac{1}{2\pi\sqrt{L2 \cdot C3}} \qquad (11)$$

$$fr3 \cong \frac{1}{2\pi\sqrt{L2 \cdot C3}} \qquad (12)$$

$$fr4 = \frac{1}{2\pi\sqrt{L1 \cdot C2}} \qquad (13)$$

In some embodiments, the first switched-capacitor power conversion system 100 is designed such that the second switched-capacitor power converter 104 and the third switched-capacitor power converter 106 have the same design parameters. For example, the inductance of the inductor L1 is equal to the inductance of the inductor L2. The capacitance of the second flying capacitor C2 is equal to the capacitance of the third flying capacitor C3. The four resonant frequencies above can satisfy the following relationship:

$$fr1 = fr2 = fr3 = fr4 = \frac{1}{2\pi\sqrt{L1 \cdot C2}} \qquad (14)$$

In order to achieve zero voltage switching, both stages of the first switched-capacitor power conversion system 100 operate at a switching frequency equal to the resonant frequency (fr) shown in Equation (14). The switching frequency can be given by the following equation:

$$fs = fr = \frac{1}{2\pi\sqrt{L1 \cdot C2}} \qquad (15)$$

The switching period of the first switched-capacitor power conversion system 100 can be expressed as:

$$Ts = 2\pi\sqrt{L1 \cdot C2} \qquad (16)$$

As shown in Figure 6, the switching period of the first switched-capacitor power conversion system 100 is equal to Ts, which is given in Equation (16). All the switches operate at 50% duty cycle.

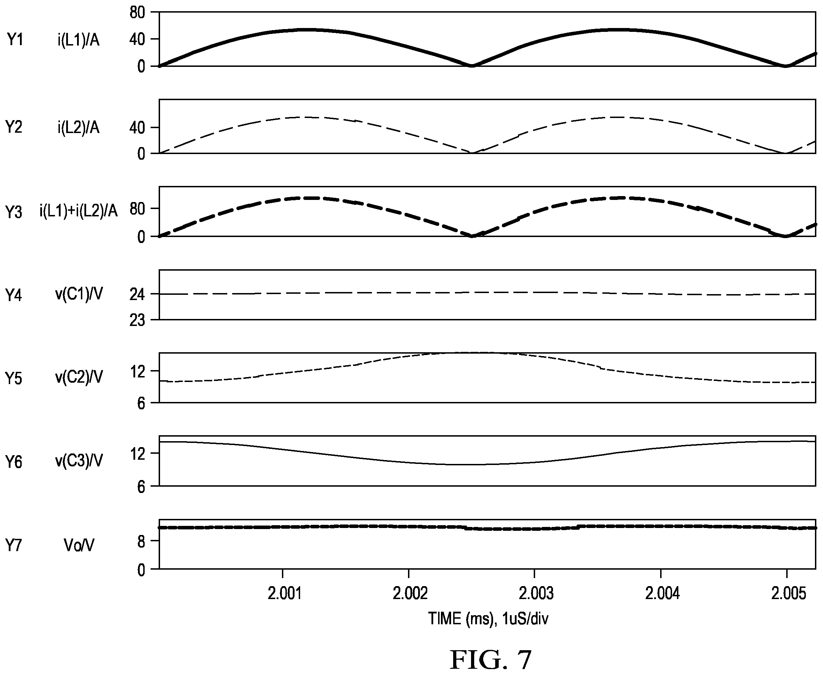

Figure 7 illustrates various waveforms of the first switched-capacitor power conversion system operating under the first operating mode in accordance with various embodiments of the present disclosure. The horizontal axis of Figure 7 represents intervals of time. There are seven vertical axes. The first vertical axis Y1 represents the current flowing through the inductor L1. The second vertical axis Y2 represents the current flowing through the inductor L2. The third vertical axis Y3 represents the sum of the current flowing through the inductor L 1 and the current flowing through the inductor L2. The four vertical axis Y4 represents the voltage across the first flying capacitor C1. The fifth vertical axis Y5 represents the voltage across the second flying capacitor C2. The sixth vertical axis Y6 represents the voltage across the third flying capacitor C3. The seventh vertical axis Y7 represents the output voltage of the first switched-capacitor power conversion system.

The waveforms shown in Figure 7 are obtained under the following operating conditions. The input voltage of the first switched-capacitor power conversion system 100 is equal to 48 V. The output voltage of the first switched-capacitor power conversion system 100 is equal to 12 V. The output power of the first switched-capacitor power conversion system 100 is equal to 800 W. The switching frequency of the first switched-capacitor power conversion system 100 is equal to 200 KHz. The capacitance of the first flying capacitor C1 is equal to 1 mF. The capacitance of the second flying capacitor C2 is equal to 20 uF. The capacitance of the third flying capacitor C3 is equal to 20 uF. The inductance of the inductor L1 is equal to 33 nH. The inductance of the inductor L2 is equal to 33 nH.

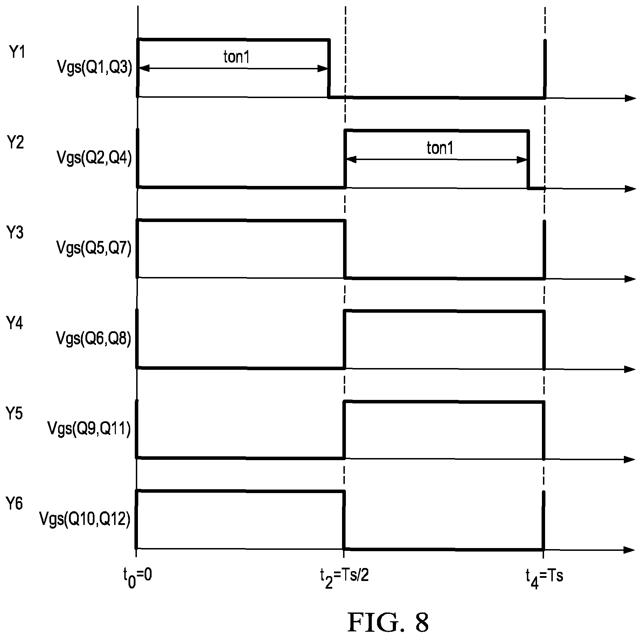

Figure 8 illustrates a gate timing diagram of the first switched-capacitor power conversion system operating in a second operating mode in accordance with various embodiments of the present disclosure. The horizontal axis of Figure 8 represents intervals of time. There are six vertical axes. The first vertical axis Y1 represents the gate drive signals of switches Q1 and Q3. The second vertical axis Y2 represents the gate drive signals of switches Q2 and Q4. The third vertical axis Y3 represents the gate drive signals of switches Q5 and Q7. The four vertical axis Y4 represents the gate drive signals of switches Q6 and Q8. The fifth vertical axis Y5 represents the gate drive signals of switches Q9 and Q11. The sixth vertical axis Y6 represents the gate drive signals of switches Q10 and Q12.

One switching cycle of the first switched-capacitor power conversion system 100 can be divided into two phases as shown in Figure 8. A first phase is from 0 to Ts/2. A second phase is from Ts/2 to Ts.

As shown in Figure 8, the duty cycle of switches Q1, Q2, Q3 and Q4 is less than 50%. Switches Q5-Q12 have a duty cycle equal to 50%. In the first switched-capacitor power converter 102, there is a delay between the falling edge of the gate drive signal of switches Q1 and Q3 and the rising edge of the gate drive signal of switches Q2 and Q4. In the second switched-capacitor power converter 104, the gate drive signal of switches Q5 and Q7 is complementary to the gate drive signal of switches Q6 and Q8. Likewise, in the third switched-capacitor power converter 106, the gate drive signal of switches Q9 and Q11 is complementary to the gate drive signal of switches Q10 and Q12. The gate drive signals of the second switched-capacitor power converter 104 and the gate drive signals of the third switched-capacitor power converter 106 are 180 degrees out of phase from one another as shown in Figure 8.

In some embodiments, the capacitance of the first flying capacitor C1 cannot satisfy the relationships ($C1 \gg C3$ and $C1 \gg C2$) described above with respect to Figure 6. If the capacitance of the first flying capacitor C1 is only about two or three times greater than the capacitance of the second flying capacitor C2 and/or the capacitance of the third flying capacitor C3, the resonant frequencies of the first switched-capacitor power conversion system 100 can be expressed as:

$$fr1 = \frac{1}{2\pi\sqrt{L1 \cdot \left(\frac{C1 \cdot C2}{C1+C2}\right)}} \qquad (17)$$

$$fr2 = \frac{1}{2\pi\sqrt{L2 \cdot C3}} \qquad (18)$$

$$fr3 = \frac{1}{2\pi\sqrt{L2 \cdot \left(\frac{C1 \cdot C3}{C1+C3}\right)}} \qquad (19)$$

$$fr4 = \frac{1}{2\pi\sqrt{L1 \cdot C2}} \qquad (20)$$

As shown in Equations (17-20), the resonant frequencies of fr1 and fr3 are greater than the resonant frequencies of fr2 and fr4. In order to compensate the mismatch between the resonant frequencies (*e.g.*, fr1 and fr2), the turn-on time of switches Q1, Q2, Q3 and Q4 is reduced as shown in the gate drive timing diagram of Figure 8. The turn-on time of switches Q1, Q2, Q3 and Q4 can be expressed as:

$$ton1 = \pi\sqrt{L1 \cdot \left(\frac{C1 \cdot C2}{C1+C2}\right)} \qquad (21)$$

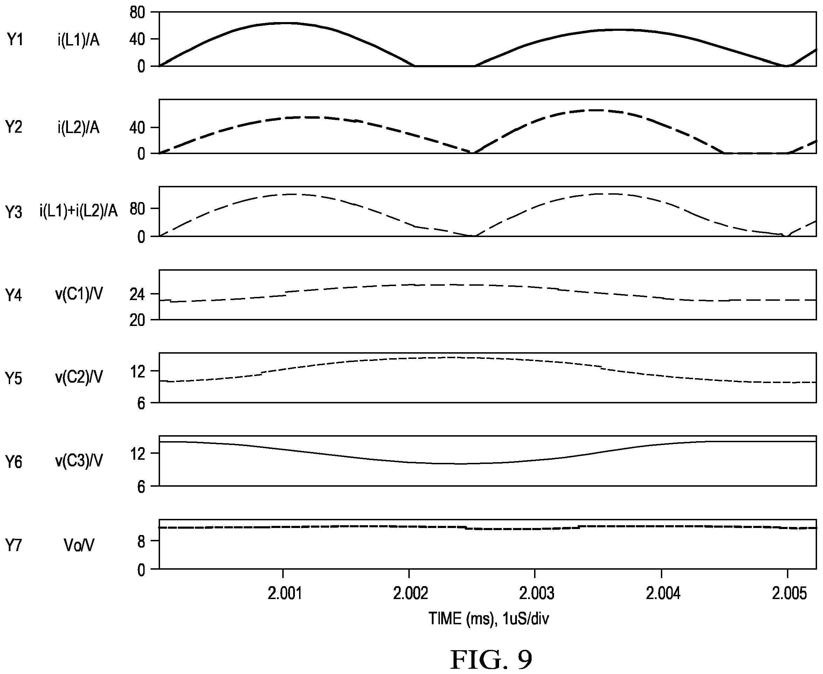

Figure 9 illustrates various waveforms of the first switched-capacitor power conversion system operating in a second operating mode in accordance with various embodiments of the present disclosure. The horizontal axis of Figure 9 represents intervals of time. There are seven vertical axes. The first vertical axis Y1 represents the current flowing through the inductor L1. The second vertical axis Y2 represents the current flowing through the inductor L2. The third vertical axis Y3 represents the sum of the current flowing through the inductor L1 and the current flowing through the inductor L2. The four vertical axis Y4 represents the voltage across the first flying capacitor C 1. The fifth vertical axis Y5 represents the voltage across the second flying capacitor C2. The sixth vertical axis Y6 represents the voltage across the third flying capacitor C3. The seventh vertical axis Y7 represents the output voltage of the first switched-capacitor power conversion system.

The waveforms shown in Figure 9 are obtained under the following operating conditions. The input voltage of the first switched-capacitor power conversion system 100 is equal to 48 V. The output voltage of the first switched-capacitor power conversion system 100 is equal to 12 V. The output power of the first switched-capacitor power conversion system 100 is equal to 800 W. The switching frequency of the first switched-capacitor power conversion system 100 is equal to 200 KHz. The capacitance of the first flying capacitor C1 is equal to 40 uF. The capacitance of the second flying capacitor C2 is equal to 20 uF. The capacitance of the third flying capacitor C3 is equal to 20 uF. The inductance of the inductor L1 is equal to 33 nH. The inductance of the inductor L2 is equal to 33 nH.

As shown in Figure 9, the current flowing through the inductor L1 has a flat portion. This flat portion is generated through applying a reduced duty cycle to the first switching-capacitor power converter 102 as shown in Figure 8. Such a flat portion helps to prevent the current from having a negative value, thereby improving the efficiency of the first switched-capacitor power conversion system 100.

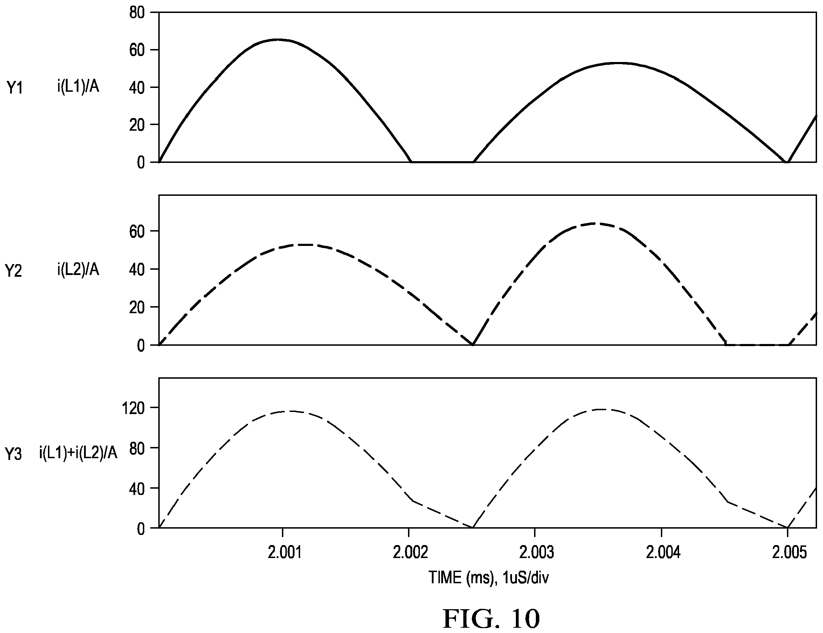

Figure 10 illustrates three waveforms of the first switched-capacitor power conversion system operating in a second operating mode in accordance with various embodiments of the present disclosure. The horizontal axis of Figure 10 represents intervals of time. There are three vertical axes. The first vertical axis Y1 represents the current flowing through the inductor L1. The second vertical axis Y2 represents the current flowing through the inductor L2. The third vertical axis Y3 represents the sum of the current flowing through the inductor L1 and the current flowing through the inductor L2. The waveforms shown in Figure 10 are similar to those shown in Figure 9, and hence are not discussed in further detail herein.

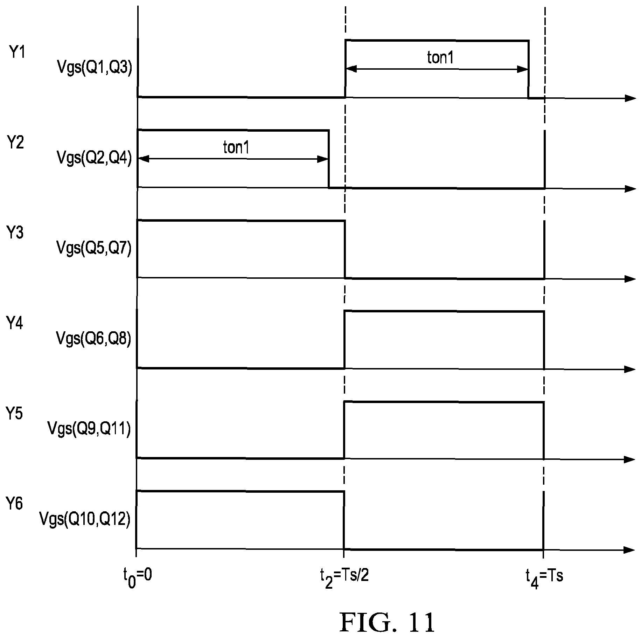

Figure 11 illustrates another gate timing diagram of the first switched-capacitor power conversion system operating in the second operating mode in accordance with various embodiments of the present disclosure. The horizontal axis of Figure 11 represents intervals of time. There are six vertical axes. The first vertical axis Y1 represents the gate drive signals of switches Q1 and Q3. The second vertical axis Y2 represents the gate drive signals of switches Q2 and Q4. The third vertical axis Y3 represents the gate drive signals of switches Q5 and Q7. The four vertical axis Y4 represents the gate drive signals of switches Q6 and Q8. The fifth vertical axis Y5 represents the gate drive signals of switches Q9 and Q11. The sixth vertical axis Y6 represents the gate drive signals of switches Q10 and Q12.

Due to the circuit symmetry of the first switched-capacitor power conversion system 100, the gate drive signals of the first stage can be shifted by Ts/2 in the time domain (180 degrees in phase) as shown in Figure 11. The operating principle of the gate timing diagram shown in Figure 11 is similar to that shown in Figure 8, and hence is not discussed in detail herein.

Referring to Figure 5, the first switched-capacitor power conversion system 100 comprises two stages. The first stage comprises the first switched-capacitor power converter 102. The second stage comprises the second switched-capacitor power converter 104 and the third switched-capacitor power converter 106 connected in parallel between an output of the first switched-capacitor power converter 102 and a load (not shown).

Under the operating modes shown in Figures 6 and 8, the first stage is configured as a 2:1 step-down power converter. The second switched-capacitor power converter 104 and the third switched-capacitor power converter 106 are connected in parallel. Each power converter of the second stage is configured as a 2:1 step-down power converter. Since the first stage and the second stage are connected in cascade, the first switched-capacitor power conversion system 100 is a 4:1 step-down power system. The second switched-capacitor power converter 104 and the third switched-capacitor power converter 106 have identical components, but operate at 180 degrees out of phase from one another. Furthermore, the first switched-capacitor power converter 102, the second switched-capacitor power converter 104 and the third switched-capacitor power converter 106 operate at a same switching frequency, which is at or near the resonant frequencies fr1-fr4 shown above.

In some embodiments, the first switched-capacitor power converter 102 distributes the power evenly to the second switched-capacitor power converter 104 and the third switched-capacitor power converter 106. Each power converter of the second stage processes one half of the power from the first switched-capacitor power converter 102. As shown in Figure 5, it is not necessary to place a bulky intermediate bus capacitor between the first stage and the second stage. This is one advantage of having the first switched-capacitor power conversion system 100 shown in Figure 5. The charging and discharging currents of the switched capacitors (e.g., flying capacitors C2 and C3) are limited by the inductors, thereby reducing the losses associated with the switched capacitor charge redistribution, and thus improving the efficiency of the first switched-capacitor power conversion system 100.

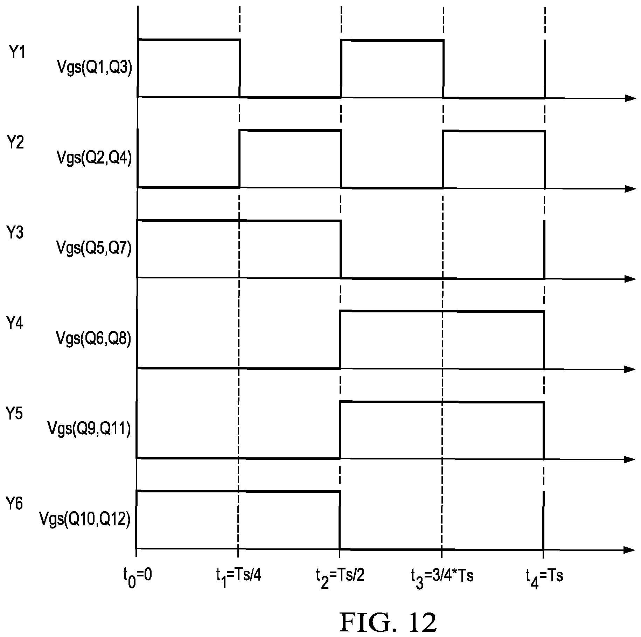

Figure 12 illustrates a gate timing diagram of the first switched-capacitor power conversion system operating in a third operating mode in accordance with various embodiments of the present disclosure. The horizontal axis of Figure 12 represents intervals of time. There are six vertical axes. The first vertical axis Y1 represents the gate drive signals of switches Q1 and Q3. The second vertical axis Y2 represents the gate drive signals of switches Q2 and Q4. The third vertical axis Y3 represents the gate drive signals of switches Q5 and Q7. The four vertical axis Y4 represents the gate drive signals of switches Q6 and Q8. The fifth vertical axis Y5 represents the gate drive signals of switches Q9 and Q11. The sixth vertical axis Y6 represents the gate drive signals of switches Q10 and Q12.

The third operating mode shown in Figure 12 is similar to the first operating mode shown in Figure 6 except that in Figure 12, the first stage and the second stage operate at two different switching frequencies. More particularly, the switching frequency of the first stage (switches Q1-Q4) is twice the switching frequency of the second stage (switches Q5-Q12).

In some embodiments, the capacitance of the output capacitor Co is much greater than that of the second flying capacitor C2 and the third flying capacitor C3. The resonant frequencies can be expressed by the following equations:

$$fr1 = \frac{1}{2\pi\sqrt{L1\cdot\left(\frac{C1\cdot C2}{C1+C2}\right)}} \qquad (22)$$

$$fr2 = \frac{1}{2\pi\sqrt{L2\cdot C3}} \qquad (23)$$

$$fr3 = \frac{1}{2\pi\sqrt{L2\cdot\left(\frac{C1\cdot C3}{C1+C3}\right)}} \qquad (24)$$

$$fr4 = \frac{1}{2\pi\sqrt{L1\cdot C2}} \qquad (25)$$

In some embodiments, the inductance of L1 is equal to the inductance of L2. The capacitance of the second flying capacitor C2 is equal to the capacitance of the third flying capacitor C3. The capacitance of the first flying capacitor C1 is equal to one third of the capacitance of the third flying capacitor C3. The four resonant frequencies above can satisfy the following relationship:

$$fr1 = fr3 = 2\times fr2 = 2\times fr4 \qquad (25)$$

In operation, the first switched-capacitor power converter 102 operates at a switching frequency equal to fr1 and fr3. The second switched-capacitor power converter 104 and the third switched-capacitor power converter 106 operate at a switching frequency equal to fr2 and fr4. In other words, the switching frequency of the first switched-capacitor power converter 102 is twice the switching frequency of the second switched-capacitor power converter 104 and the third switched-capacitor power converter 106.

One advantageous feature of having two stages operating at two different switching frequencies is that the capacitance of the first flying capacitor C1 can be much smaller, thereby reducing the cost of the first switched-capacitor power conversion system.

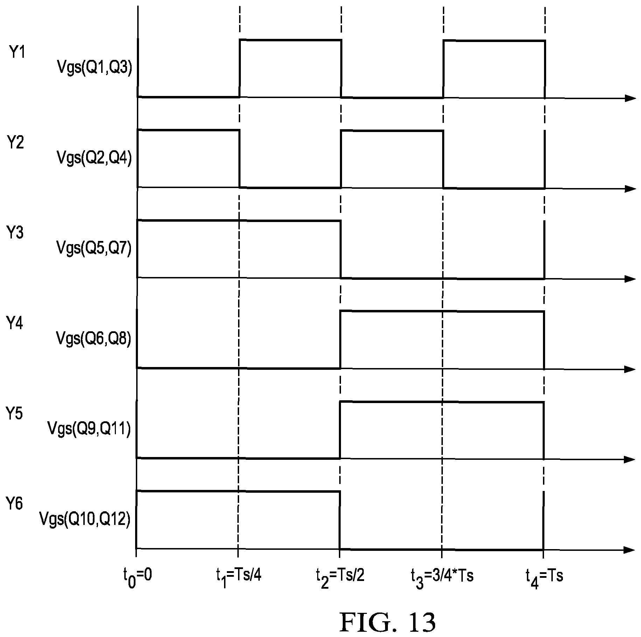

Figure 13 illustrates another gate timing diagram of the first switched-capacitor power conversion system operating in the third operating mode in accordance with various embodiments of the present disclosure. The horizontal axis of Figure 13 represents intervals of time. There are six vertical axes. The first vertical axis Y1 represents the gate drive signals of switches Q1 and Q3. The second vertical axis Y2 represents the gate drive signals of switches Q2 and Q4. The third vertical axis Y3 represents the gate drive signals of switches Q5 and Q7. The four vertical axis Y4 represents the gate drive signals of switches Q6 and Q8. The fifth vertical axis Y5 represents the gate drive signals of switches Q9 and Q11. The sixth vertical axis Y6 represents the gate drive signals of switches Q10 and Q12.

Due to the circuit symmetry of the first switched-capacitor power conversion system 100, the gate drive signals of the first stage can be shifted by Ts/4 in the time domain (180 degrees in phase) as shown in Figure 13. The operating principle of the gate timing diagram shown in Figure 13 is similar to that shown in Figure 12, and hence is not discussed in detail herein.

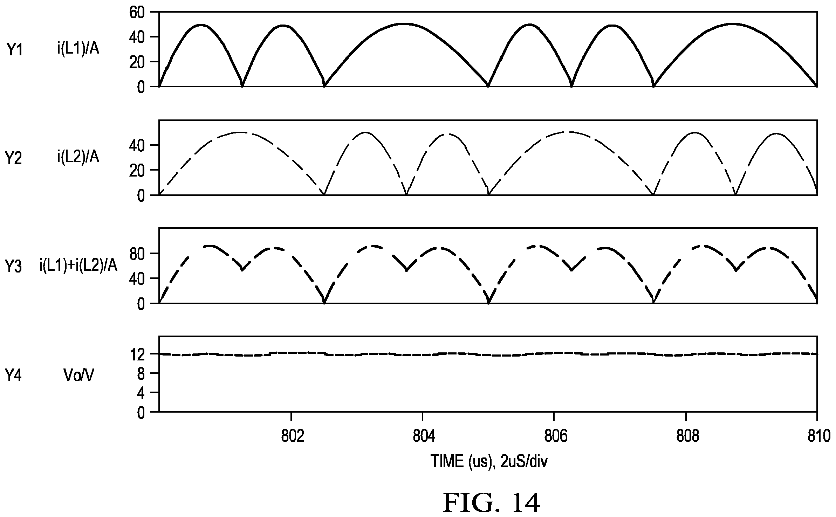

Figure 14 illustrates various waveforms of the first switched-capacitor power conversion system operating in the third operating mode in accordance with various embodiments of the present disclosure. The horizontal axis of Figure 14 represents intervals of time. There are four vertical axes. The first vertical axis Y1 represents the current flowing through the inductor L1. The second vertical axis Y2 represents the current flowing through the inductor L2. The third vertical axis Y3 represents the sum of the current flowing through the inductor L 1 and the current flowing through the inductor L2. The four vertical axis Y4 the output voltage of the first switched-capacitor power conversion system.

The waveforms shown in Figure 14 are obtained under the following operating conditions. The input voltage of the first switched-capacitor power conversion system 100 is equal to 48 V. The output voltage of the first switched-capacitor power conversion system 100 is equal to 12 V. The output power of the first switched-capacitor power conversion system 100 is equal to 800 W. The switching frequency of the first switched-capacitor power converter 102 is equal to 400 KHz. The switching frequency of the second switched-capacitor power converter 104 and the third switched-capacitor power converter 106 is equal to 200 KHz. The capacitance of the first flying capacitor C1 is equal to 6.8 uF. The capacitance of the second flying capacitor C2 is equal to 20 uF. The capacitance of the third flying capacitor C3 is equal to 20 uF. The inductance of the inductor L1 is equal to 33 nH. The inductance of the inductor L2 is equal to 33 nH.

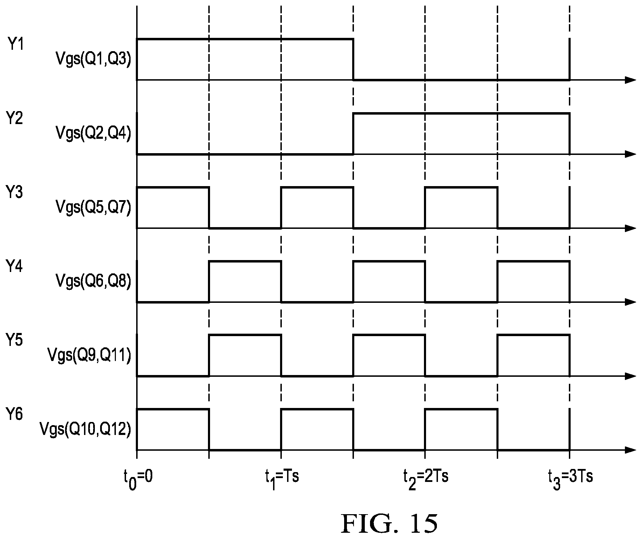

Figure 15 illustrates a gate timing diagram of the first switched-capacitor power conversion system operating in a fourth operating mode in accordance with various embodiments of the present disclosure. The horizontal axis of Figure 15 represents intervals of time. There are six vertical axes. The first vertical axis Y1 represents the gate drive signals of switches Q1 and Q3. The second vertical axis Y2 represents the gate drive signals of switches Q2 and Q4. The third vertical axis Y3 represents the gate drive signals of switches Q5 and Q7. The four vertical axis Y4 represents the gate drive signals of switches Q6 and Q8. The fifth vertical axis Y5 represents the gate drive signals of switches Q9 and Q11. The sixth vertical axis Y6 represents the gate drive signals of switches Q10 and Q12.

The fourth operating mode shown in Figure 15 is similar to the first operating mode shown in Figure 6 except that in Figure 15, the first stage and the second stage operate at two different switching frequencies. More particularly, the switching frequency of the second stage is equal to three times the switching frequency of the first stage.

In some embodiments, the capacitance of the output capacitor Co is much greater than that of the second flying capacitor C2 and the third flying capacitor C3. Likewise, the capacitance of the first flying capacitor C1 is much greater than that of the second flying capacitor C2 and the third flying capacitor C3. The resonant frequencies can be expressed by the following equations:

$$fr1 \cong \frac{1}{2\pi\sqrt{L1 \cdot C2}} \qquad (26)$$

$$fr2 = \frac{1}{2\pi\sqrt{L2 \cdot C3}} \qquad (27)$$

$$fr3 \cong \frac{1}{2\pi\sqrt{L2 \cdot C3}} \qquad (28)$$

$$fr4 = \frac{1}{2\pi\sqrt{L1 \cdot C2}} \qquad (29)$$

In some embodiments, the inductance of L1 is equal to the inductance of L2. The capacitance of the second flying capacitor C2 is equal to the capacitance of the third flying capacitor C3. The four resonant frequencies above can satisfy the following relationship:

$$fr1 = fr2 = fr3 = fr4 = \frac{1}{2\pi\sqrt{L1 \cdot C2}} \qquad (30)$$

The switching frequency (fs) of the second stage is selected as:

$$fs \cong \frac{1}{2\pi\sqrt{L1 \cdot C2}} \qquad (31)$$

In addition, the capacitance of the first flying capacitor C1 should be much greater than that of C2 and C3 so as to keep the AC voltage ripple on the first flying capacitor C1 as small as possible, and thus keep the amplitude envelopes of the inductor currents reasonably smooth.

It should be noted while Figure 15 shows the switching frequency of the first stage is equal to one third of the switching frequency of the second stage, this is merely an example. Depending on different applications and design needs, the switching frequency of the first stage can be set at fs, fs/3, fs/5 ... fs/N ... where N is an odd number and fs is the switching frequency of the second stage. One advantageous feature of setting N as an odd number is the current can be evenly distributed between inductors L1 and L2 without having a large first flying capacitor C1.

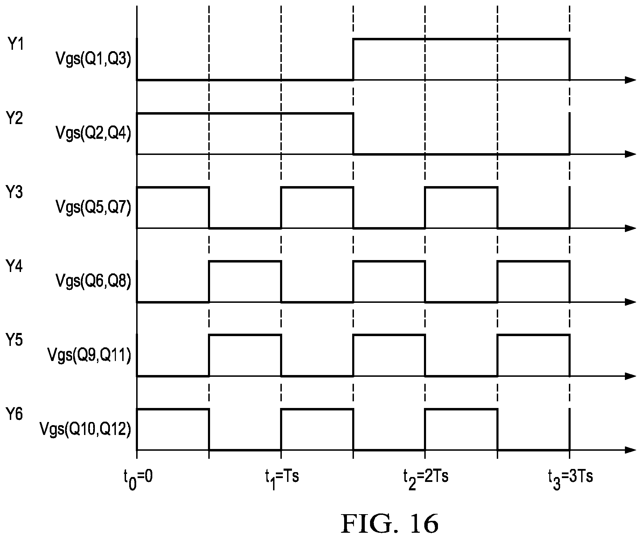

Figure 16 illustrates another gate timing diagram of the first switched-capacitor power conversion system operating in the fourth operating mode in accordance with various embodiments of the present disclosure. The horizontal axis of Figure 16 represents intervals of time. There are six vertical axes. The first vertical axis Y1 represents the gate drive signals of switches Q1 and Q3. The second vertical axis Y2 represents the gate drive signals of switches Q2 and Q4. The third vertical axis Y3 represents the gate drive signals of switches Q5 and Q7. The four vertical axis Y4 represents the gate drive signals of switches Q6 and Q8. The fifth vertical axis Y5 represents the gate drive signals of switches Q9 and Q11. The sixth vertical axis Y6 represents the gate drive signals of switches Q10 and Q12.

Due to the circuit symmetry of the first switched-capacitor power conversion system 100, the gate drive signals of the first stage can be shifted by 1.5×Ts in the time domain (180 degrees in phase) as shown in Figure 15. The operating principle of the gate timing diagram shown in Figure 15 is similar to that shown in Figure 14, and hence is not discussed in detail herein.

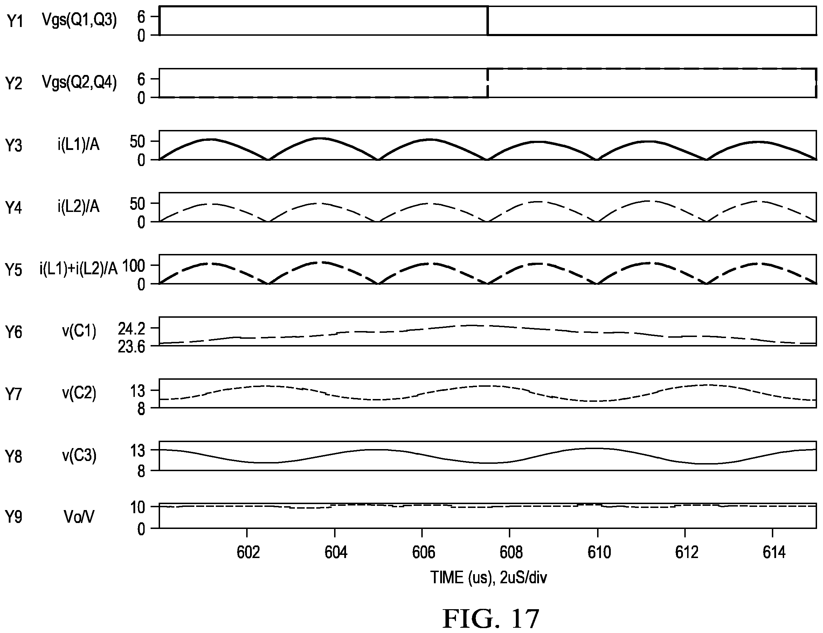

Figure 17 illustrates various waveforms of the first switched-capacitor power conversion system operating in the fourth operating mode in accordance with various embodiments of the present disclosure. The horizontal axis of Figure 17 represents intervals of time. There are nine vertical axes. The first vertical axis Y1 represents the gate drive signals of switches Q1 and Q3. The second vertical axis Y2 represents the gate drive signals of switches Q2 and Q4. The third vertical axis Y3 represents the current flowing through the inductor L1. The fourth vertical axis Y4 represents the current flowing through the inductor L2. The fifth vertical axis Y5 represents the sum of the current flowing through the inductor L1 and the current flowing through the inductor L2. The sixth vertical axis Y6 represents the voltage across the first flying capacitor C1. The seventh vertical axis Y7 represents the voltage across the second flying capacitor C2. The eighth vertical axis Y8 represents the voltage across the third flying capacitor C3. The ninth vertical axis Y9 represents the output voltage of the first switched-capacitor power conversion system.

The waveforms shown in Figure 17 are obtained under the following operating conditions. The input voltage of the first switched-capacitor power conversion system 100 is equal to 48 V. The output voltage of the first switched-capacitor power conversion system 100 is equal to 12 V. The output power of the first switched-capacitor power conversion system 100 is equal to 800 W. The switching frequency of the first switched-capacitor power converter 102 is equal to 66.7 KHz. The switching frequency of the second switched-capacitor power converter 104 and the third switched-capacitor power converter 106 is equal to 200 KHz. The capacitance of the first flying capacitor C1 is equal to 400 uF. The capacitance of the second flying capacitor C2 is equal to 20 uF. The capacitance of the third flying capacitor C3 is equal to 20 uF. The inductance of the inductor L1 is equal to 33 nH. The inductance of the inductor L2 is equal to 33 nH.

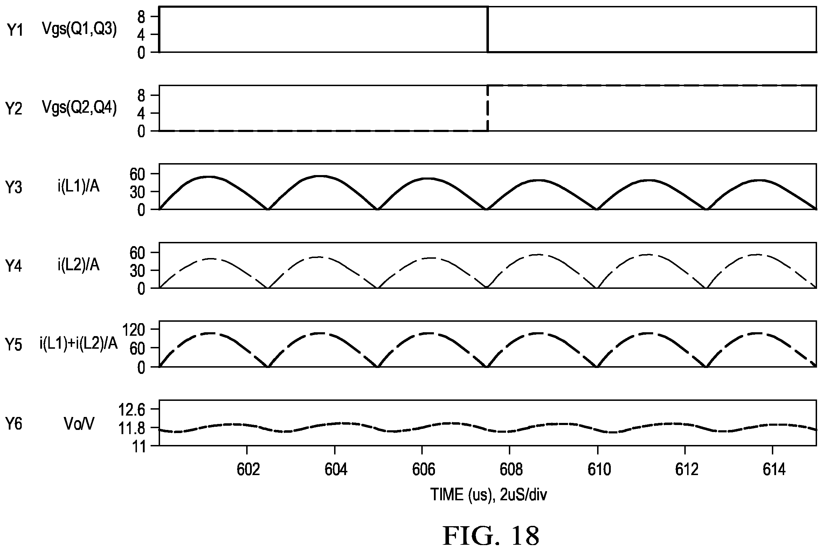

Figure 18 illustrates six waveforms of the first switched-capacitor power conversion system operating in the fourth operating mode in accordance with various embodiments of the present disclosure. The horizontal axis of Figure 18 represents intervals of time. There are six vertical axes. The first vertical axis Y1 represents the gate drive signals of switches Q1 and Q3. The second vertical axis Y2 represents the gate drive signals of switches Q2 and Q4. The third vertical axis Y3 represents the current flowing through the inductor L1. The fourth vertical axis Y4 represents the current flowing through the inductor L2. The fifth vertical axis Y5 represents the sum of the current flowing through the inductor L1 and the current flowing through the inductor L2. The sixth vertical axis Y6 represents the output voltage of the first switched-capacitor power conversion system.

The waveforms shown in Figure 18 are obtained under the following operating conditions. The input voltage of the first switched-capacitor power conversion system 100 is equal to 48 V. The output voltage of the first switched-capacitor power conversion system 100 is equal to 12 V. The output power of the first switched-capacitor power conversion system 100 is equal to 800 W. The switching frequency of the first switched-capacitor power converter 102 is equal to 66.7 KHz. The switching frequency of the second switched-capacitor power converter 104 and the third switched-capacitor power converter 106 is equal to 200 KHz. The capacitance of the first flying capacitor C1 is equal to 400 uF. The capacitance of the second flying capacitor C2 is equal to 20 uF. The capacitance of the third flying capacitor C3 is equal to 20 uF. The inductance of the inductor L1 is equal to 33 nH. The inductance of the inductor L2 is equal to 33 nH.

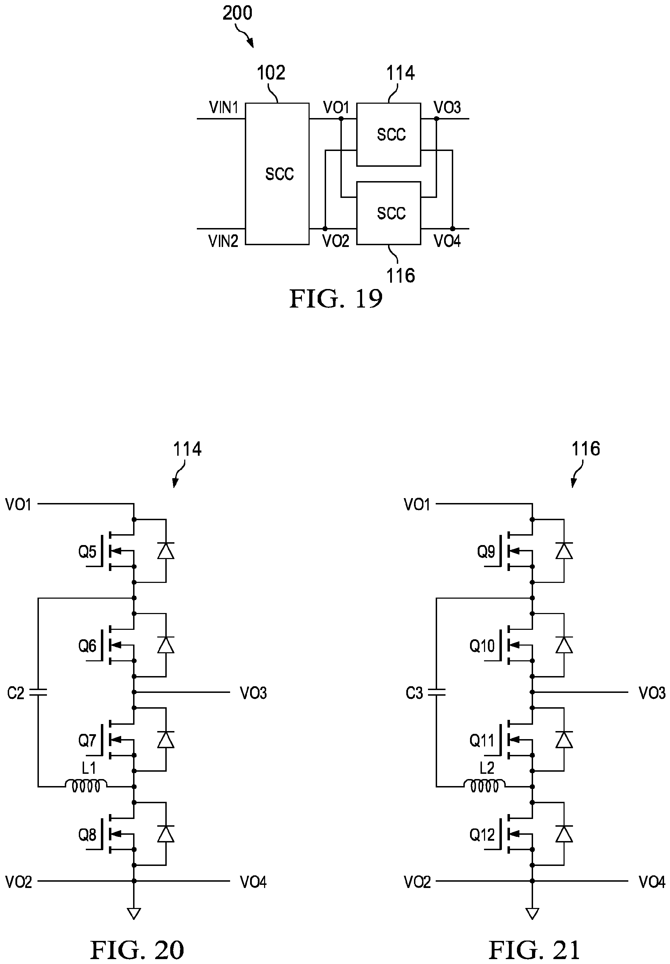

Figure 19 illustrates a block diagram of a second switched-capacitor power conversion system in accordance with various embodiments of the present disclosure. The second switched-capacitor power conversion system 200 shown in Figure 19 is similar to the first switched-capacitor power conversion system 100 shown in Figure 1 except the second stage is formed by different switched-capacitor power converters. As shown in Figure 19, the second stage comprises a fourth switched-capacitor power converter 114 and a fifth switched-capacitor power converter 116 connected in parallel. The detailed structure of the fourth switched-capacitor power converter 114 and the fifth switched-capacitor power converter 116 will be described below with respect to Figures 20 and 21, respectively.

The second switched-capacitor power conversion system 200 is configured as a step-down power conversion system when an input power source is connected to inputs of the first switched-capacitor power converter, and a load is connected to the outputs of the fourth switched-capacitor power converter 114 and a fifth switched-capacitor power converter 116. It should be noted that by swapping the input port and the output port shown in Figure 19, the second switched-capacitor power conversion system 200 can be configured as step-up switched-capacitor power conversion system.

Figure 20 illustrates a schematic diagram of the fourth switched-capacitor power converter shown in Figure 19 in accordance with various embodiments of the present disclosure. The fourth switched-capacitor power converter 114 shown in Figure 20 is similar to the second switched-capacitor power converter 104 shown in Figure 3 except that the inductor L1 and the second flying capacitor C2 are connected in series between a common node of switches Q5, Q6, and a common node of switches Q7, Q8. The inductor L1 and the second flying capacitor C2 form a resonant tank for the fourth switched-capacitor power converter 114.

Figure 21 illustrates a schematic diagram of the fifth switched-capacitor power converter shown in Figure 19 in accordance with various embodiments of the present disclosure. The fifth switched-capacitor power converter 116 shown in Figure 21 is similar to the third switched-capacitor power converter 106 shown in Figure 4 except that the inductor L2 and the third flying capacitor C3 are connected in series between a common node of switches Q9, Q10, and a common node of switches Q11, Q12. The inductor L2 and the third flying capacitor C3 form a resonant tank for the fifth switched-capacitor power converter 116.

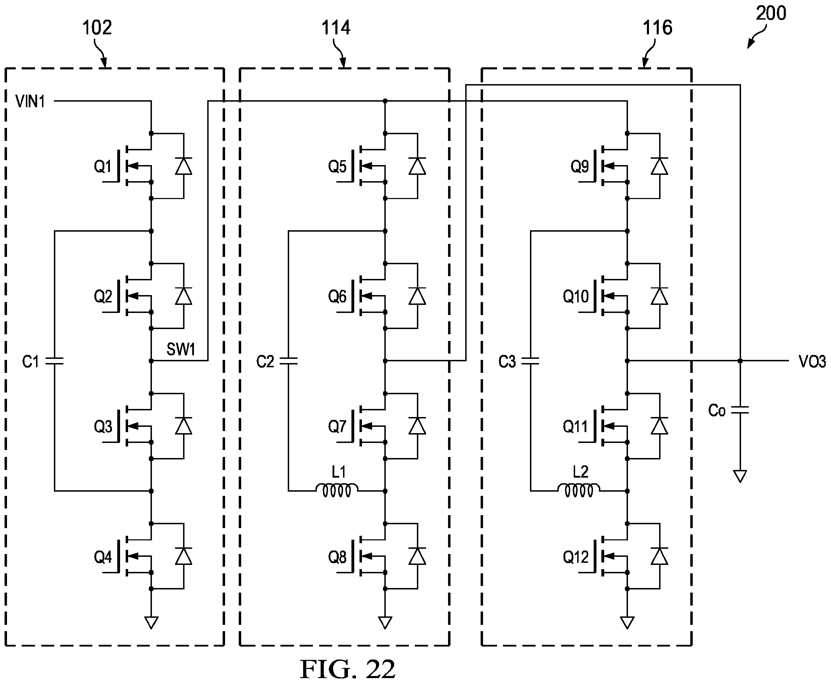

Figure 22 illustrates a schematic diagram of the second switched-capacitor power conversion system shown in Figure 19 in accordance with various embodiments of the present disclosure. The second switched-capacitor power conversion system 200 comprises two power conversion stages connected in cascade between the first input voltage bus VIN1 and the third output voltage bus VO3. The first power conversion stage comprises the first switched-capacitor power converter 102. The second power conversion stage comprises the fourth switched-capacitor power converter 114 and the fifth switched-capacitor power converter 116 connected in parallel between the output of the first power conversion stage and the output (VO3) of the second switched-capacitor power conversion system 200. An output capacitor Co is connected between VO3 and ground. The output capacitor Co, the inductor L1 and the inductor L2 form two output filters connected in parallel.

In operation, the operating modes and the associated control mechanisms described above with respect to the first switched-capacitor power conversion system 100 are also applicable to the second switched-capacitor power conversion system 200 shown in Figure 22.

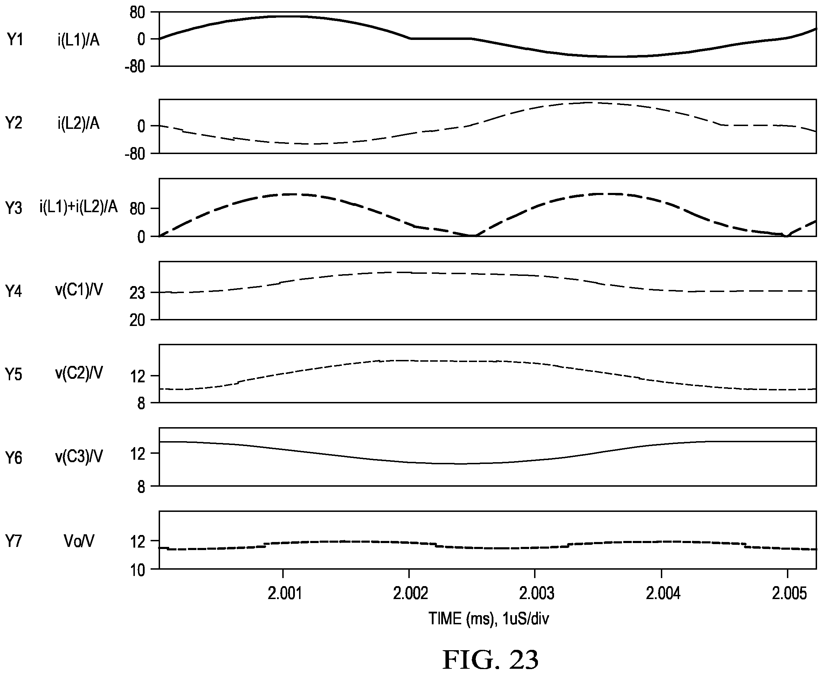

Figure 23 illustrates various waveforms of the second switched-capacitor power conversion system operating in the second operating mode in accordance with various embodiments of the present disclosure. The horizontal axis of Figure 23 represents intervals of time. There are seven vertical axes. The first vertical axis Y1 represents the current flowing through the inductor L1. The second vertical axis Y2 represents the current flowing through the inductor L2. The third vertical axis Y3 represents the sum of the current flowing through the inductor L1 and the current flowing through the inductor L2. The four vertical axis Y4 represents the voltage across the first flying capacitor C1. The fifth vertical axis Y5 represents the voltage across the second flying capacitor C2. The sixth vertical axis Y6 represents the voltage across the third flying capacitor C3. The seventh vertical axis Y7 represents the output voltage of the second switched-capacitor power conversion system.

The waveforms shown in Figure 23 are obtained under the following operating conditions. The input voltage of the second switched-capacitor power conversion system 200 is equal to 48 V. The output voltage of the second switched-capacitor power conversion system 200 is equal to 12 V. The output power of the second switched-capacitor power conversion system 200 is equal to 800 W. The switching frequency of the second switched-capacitor power conversion system 200 is equal to 200 KHz. The capacitance of the first flying capacitor C1 is equal to 40 uF. The capacitance of the second flying capacitor C2 is equal to 20 uF. The capacitance of the third flying capacitor C3 is equal to 20 uF. The inductance of the inductor L1 is equal to 33 nH. The inductance of the inductor L2 is equal to 33 nH.

As shown in Figure 23, the current flowing through the inductor L1 has a flat portion. This flat portion is generated through applying a reduced duty cycle to the first switching-capacitor power converter 102 (reduced duty cycle shown in Figure 8). Such a flat portion helps to prevent the current from having a negative value, thereby improving the efficiency of the second switched-capacitor power conversion system 200.

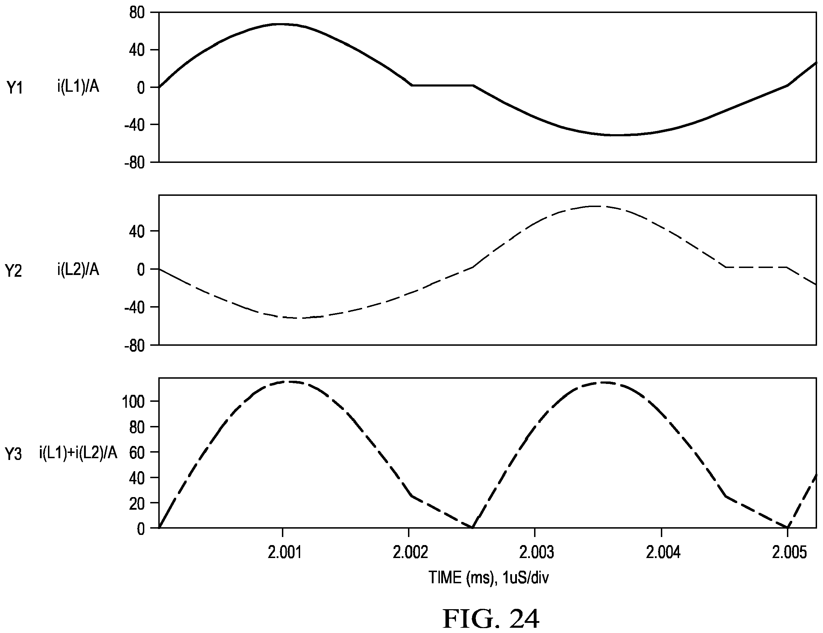

Figure 24 illustrates three waveforms of the second switched-capacitor power conversion system operating in the second operating mode in accordance with various embodiments of the present disclosure. The horizontal axis of Figure 24 represents intervals of time. There are three vertical axes. The first vertical axis Y1 represents the current flowing through the inductor L1. The second vertical axis Y2 represents the current flowing through the inductor L2. The third vertical axis Y3 represents the sum of the current flowing through the inductor L 1 and the current flowing through the inductor L2. The waveforms shown in Figure 24 are similar to those shown in Figure 23, and hence are not discussed in further detail herein.

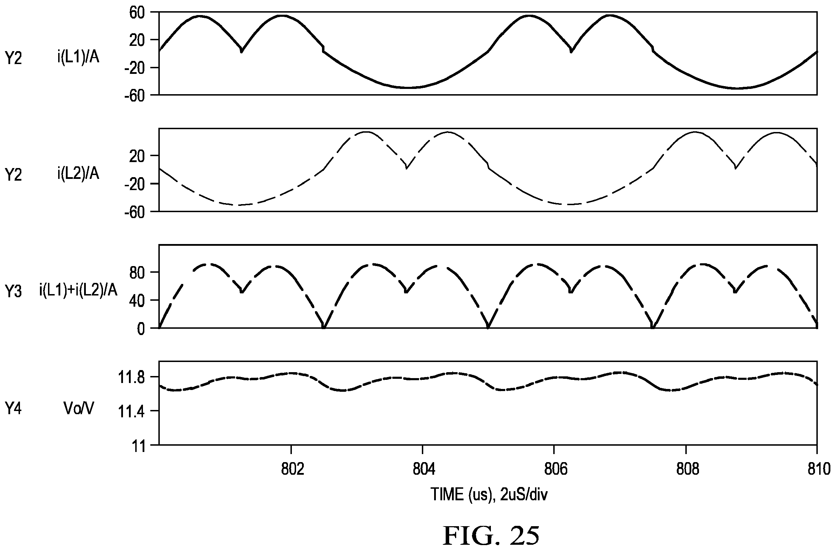

Figure 25 illustrates three waveforms of the second switched-capacitor power conversion system operating in the third operating mode in accordance with various embodiments of the present disclosure. The horizontal axis of Figure 25 represents intervals of time. There are four vertical axes. The first vertical axis Y1 represents the current flowing through the inductor L1. The second vertical axis Y2 represents the current flowing through the inductor L2. The third vertical axis Y3 represents the sum of the current flowing through the inductor L 1 and the current flowing through the inductor L2. The four vertical axis Y4 the output voltage of the second switched-capacitor power conversion system.

The waveforms shown in Figure 25 are obtained under the following operating conditions. The input voltage of the second switched-capacitor power conversion system 200 is equal to 48 V. The output voltage of the second switched-capacitor power conversion system 200 is equal to 12 V. The output power of the second switched-capacitor power conversion system 200 is equal to 800 W. The switching frequency of the first switched-capacitor power converter 102 is equal to 400 KHz. The switching frequency of the fourth switched-capacitor power converter 114 and the fifth switched-capacitor power converter 116 is equal to 200 KHz. The capacitance of the first flying capacitor C1 is equal to 40 uF. The capacitance of the second flying capacitor C2 is equal to 20 uF. The capacitance of the third flying capacitor C3 is equal to 20 uF. The inductance of the inductor L1 is equal to 33 nH. The inductance of the inductor L2 is equal to 33 nH.

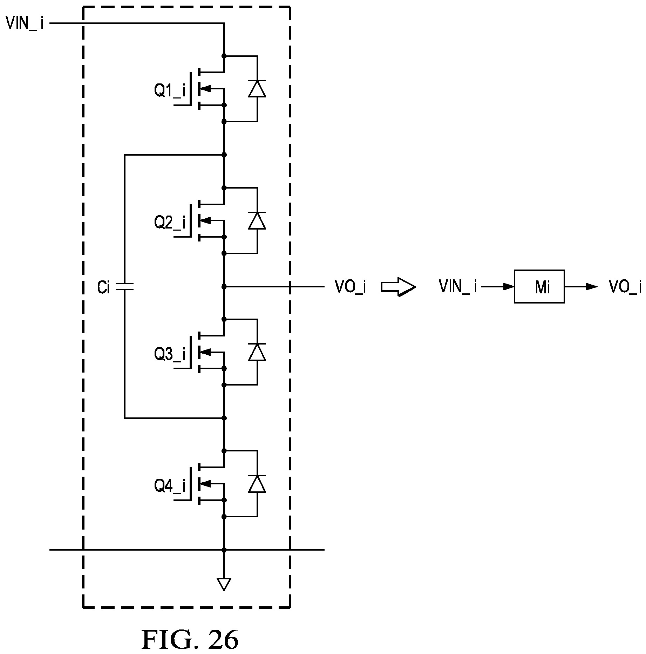

Figure 26 illustrates a first power conversion unit of a multi-stage switched-capacitor power conversion system in accordance with various embodiments of the present disclosure. The first switched-capacitor power converter 102 shown in Figure 2 is categorized as a first power conversion unit Mi, where i is equal to 1, 2, 3, ... The first power conversion unit Mi comprises four switches Q1_i, Q2_i, Q3_i and Q4_i connected in series between an input voltage bus VIN_i and ground. A flying capacitor Ci is connected between a common node of switches Q1_i, Q2_i, and a common node of switches Q3_i, Q4_i. The output VO_i of the first power conversion unit Mi is connected to a common node of switches Q2_i and Q3_i. Throughout the description, the first power conversion unit Mi may be alternatively referred to as a power conversion unit Mi.

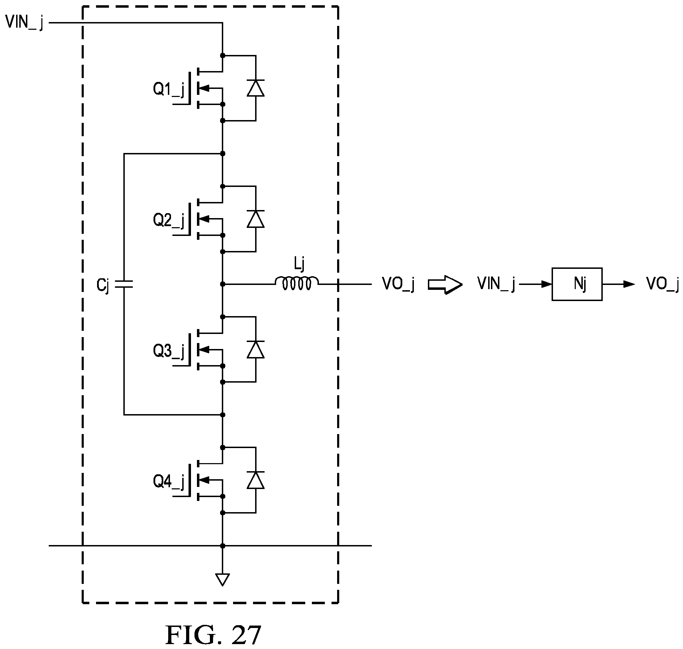

Figure 27 illustrates a second power conversion unit of a multi-stage switched-capacitor power conversion system in accordance with various embodiments of the present disclosure. The second switched-capacitor power converter 104 shown in Figure 2 and the third switched-capacitor power converter 106 shown in Figure 3 are categorized as a second power conversion unit Nj, where j is equal to 1, 2, 3, ... The second power conversion unit Nj comprises four switches Q1_j, Q2_j, Q3_j and Q4_j connected in series between an input voltage bus VIN_j and ground. A flying capacitor Cj is connected between a common node of switches Q1_j, Q2_j, and a common node of switches Q3_j, Q4,j. The output VO_j of the second power conversion unit Nj is connected to a common node of switches Q2_j and Q3_j through an inductor Lj. Throughout the description, the second power conversion unit Nj may be alternatively referred to as a power conversion unit Nj.

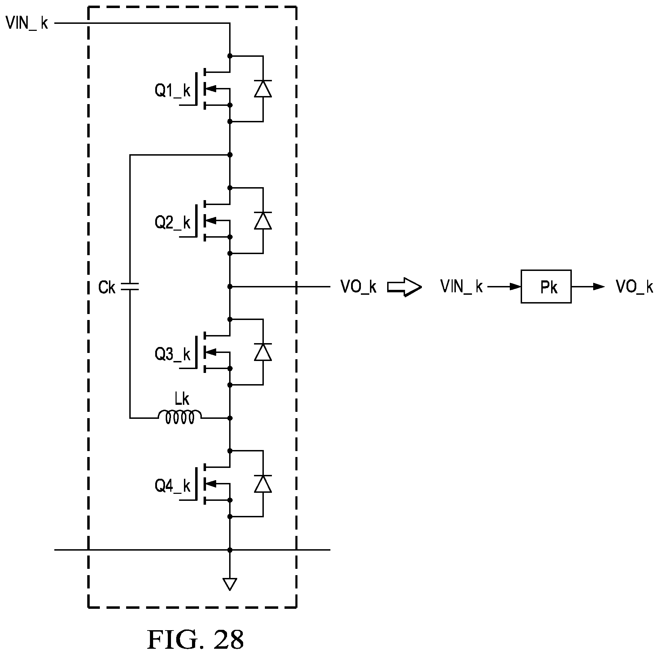

Figure 28 illustrates a third power conversion unit of a multi-stage switched-capacitor power conversion system in accordance with various embodiments of the present disclosure. The fourth switched-capacitor power converter 114 shown in Figure 20 and the fifth switched-capacitor power converter 116 shown in Figure 21 are categorized as a third power conversion unit Pk, where k is equal to 1, 2, 3, ... The third power conversion unit Pk comprises four switches Q1_k, Q2_k, Q3_k and Q4_k connected in series between an input voltage bus VIN_k and ground. A flying capacitor Ck and an inductor Lk are connected in series between a common node of switches Q1_k, Q2_k, and a common node of switches Q3_k, Q4_k. The output VO_k of the third power conversion unit Pk is connected to a common node of switches Q2_k and Q3_k. Throughout the description, the first power conversion unit Pk may be alternatively referred to as a power conversion unit Pk.

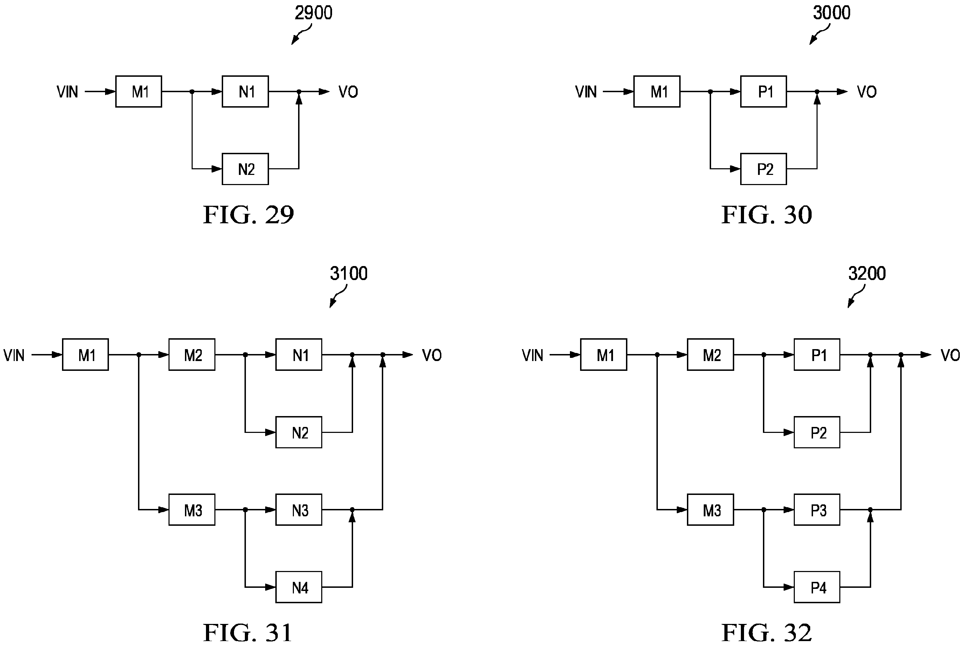

Figure 29 illustrates a first two-stage switched-capacitor power conversion system in accordance with various embodiments of the present disclosure. The first two-stage switched-capacitor power conversion system 2900 comprises a first stage and a second stage connected in cascade between an input voltage VIN and an output voltage terminal VO. The first stage is implemented as a first power conversion unit M1. The second stage comprises a first power conversion unit N1 and a second power conversion unit N2 connected in parallel between an output of the first power conversion unit M1 and the output voltage terminal VO. The first two-stage switched-capacitor power conversion system 2900 is a 4:1 step-down power conversion system. The four operating modes described above are applicable to the first two-stage switched-capacitor power conversion system 2900.

Figure 30 illustrates a second two-stage switched-capacitor power conversion system in accordance with various embodiments of the present disclosure. The second two-stage switched-capacitor power conversion system 3000 comprises a first stage and a second stage connected in cascade between an input voltage VIN and an output voltage terminal VO. The first stage is implemented as a first power conversion unit M1. The second stage comprises a first power conversion unit P1 and a second power conversion unit P2 connected in parallel between an output of the first power conversion unit M1 and the output voltage terminal VO. The second two-stage switched-capacitor power conversion system 3000 is a 4:1 step-down power conversion system. The four operating modes described above are applicable to the second two-stage switched-capacitor power conversion system 3000.

Figure 31 illustrates a first three-stage switched-capacitor power conversion system in accordance with various embodiments of the present disclosure. The first three-stage switched-capacitor power conversion system 3100 comprises a first stage, a second stage and a third stage connected in cascade between an input voltage VIN and an output voltage terminal VO. The first stage is implemented as a first power conversion unit M1. The second stage comprises a second conversion unit M2 and a third power conversion unit M3. The inputs of the second conversion unit M2 and the third power conversion unit M3 are connected together and further connected to an output of the first power conversion unit M1.

The third stage comprises a first power conversion unit N1, a second power conversion unit N2, a third power conversion unit N3 and a fourth power conversion unit N4. The first power conversion unit N1 and the second power conversion unit N2 are connected in parallel between an output of the second power conversion unit M2 and the output voltage terminal VO. The third power conversion unit N3 and the fourth power conversion unit N4 are connected in parallel between an output of the second power conversion unit M2 and the output voltage terminal VO.

The first three-stage switched-capacitor power conversion system 3100 is an 8:1 step-down power conversion system. The four operating modes described above are applicable to the first three-stage switched-capacitor power conversion system 3100.

Figure 32 illustrates a second three-stage switched-capacitor power conversion system in accordance with various embodiments of the present disclosure. The second three-stage switched-capacitor power conversion system 3200 comprises a first stage, a second stage and a third stage connected in cascade between an input voltage VIN and an output voltage terminal VO. The first stage is implemented as a first power conversion unit M1. The second stage comprises a second conversion unit M2 and a third power conversion unit M3. The inputs of the second conversion unit M2 and the third power conversion unit M3 are connected together and further connected to an output of the first power conversion unit M1.

The third stage comprises a first power conversion unit P1, a second power conversion unit P2, a third power conversion unit P3 and a fourth power conversion unit P4. The first power conversion unit P1 and the second power conversion unit P2 are connected in parallel between an output of the second power conversion unit M2 and the output voltage terminal VO. The third power conversion unit P3 and the fourth power conversion unit P4 are connected in parallel between an output of the second power conversion unit M2 and the output voltage terminal VO.

The second three-stage switched-capacitor power conversion system 3200 is an 8:1 step-down power conversion system. The four operating modes described above are applicable to the second three-stage switched-capacitor power conversion system 3200.

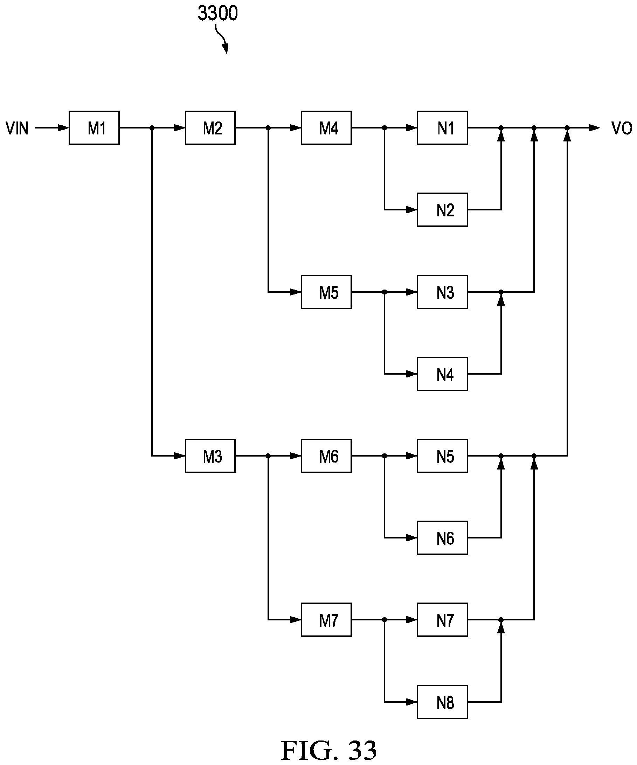

Figure 33 illustrates a first four-stage switched-capacitor power conversion system in accordance with various embodiments of the present disclosure. The first four-stage switched-capacitor power conversion system 3300 comprises a first stage, a second stage, a third stage and a fourth stage connected in cascade between an input voltage VIN and an output voltage terminal VO. The first stage is implemented as a first power conversion unit M1. The second stage comprises a second conversion unit M2 and a third power conversion unit M3. The inputs of the second conversion unit M2 and the third power conversion unit M3 are connected together and further connected to an output of the first power conversion unit M1.

The third stage comprises a fourth power conversion unit M4, a fifth power conversion unit M5, a sixth power conversion unit M6 and a seventh power conversion unit M7. As shown in Figure 33, the inputs of the fourth power conversion unit M4 and the fifth power conversion unit M5 are connected together and further connected to an output of the second power conversion unit M2. Likewise, the inputs of the sixth power conversion unit M6 and the seventh power conversion unit M7 are connected together and further connected to an output of the third power conversion unit M3.

The fourth stage comprises a first power conversion unit N1, a second power conversion unit N2, a third power conversion unit N3, a fourth power conversion unit N4, a fifth power conversion unit N5, a sixth power conversion unit N6, a seventh power conversion unit N7 and an eighth power conversion unit N8. As shown in Figure 33, the first power conversion unit N1 and the second power conversion unit N2 are connected in parallel between an output of the fourth power conversion unit M4 and the output voltage terminal VO. The third power conversion unit N3 and the fourth power conversion unit N4 are connected in parallel between an output of the fifth power conversion unit M5 and the output voltage terminal VO. The fifth power conversion unit N5 and the sixth power conversion unit N6 are connected in parallel between an output of the sixth power conversion unit M6 and the output voltage terminal VO. The seventh power conversion unit N7 and the eighth power conversion unit N8 are connected in parallel between an output of the seventh power conversion unit M7 and the output voltage terminal VO.

The first four-stage switched-capacitor power conversion system 3300 is a 16:1 step-down power conversion system. The four operating modes described above are applicable to the first four-stage switched-capacitor power conversion system 3300.

Figure 34 illustrates a second four-stage switched-capacitor power conversion system in accordance with various embodiments of the present disclosure. The second four-stage switched-capacitor power conversion system 3400 comprises a first stage, a second stage, a third stage and a fourth stage connected in cascade between an input voltage VIN and an output voltage terminal VO. The first stage is implemented as a first power conversion unit M1. The second stage comprises a second conversion unit M2 and a third power conversion unit M3. The inputs of the second conversion unit M2 and the third power conversion unit M3 are connected together and further connected to an output of the first power conversion unit M1.

The third stage comprises a fourth power conversion unit M4, a fifth power conversion unit M5, a sixth power conversion unit M6 and a seventh power conversion unit M7. As shown in Figure 34, the inputs of the fourth power conversion unit M4 and the fifth power conversion unit M5 are connected together and further connected to an output of the second power conversion unit M2. Likewise, the inputs of the sixth power conversion unit M6 and the seventh power conversion unit M7 are connected together and further connected to an output of the third power conversion unit M3.

The fourth stage comprises a first power conversion unit P1, a second power conversion unit P2, a third power conversion unit P3, a fourth power conversion unit P4, a fifth power conversion unit P5, a sixth power conversion unit P6, a seventh power conversion unit P7 and an eighth power conversion unit P8. As shown in Figure 34, the first power conversion unit P1 and the second power conversion unit P2 are connected in parallel between an output of the fourth power conversion unit M4 and the output voltage terminal VO. The third power conversion unit P3 and the fourth power conversion unit P4 are connected in parallel between an output of the fifth power conversion unit M5 and the output voltage terminal VO. The fifth power conversion unit P5 and the sixth power conversion unit P6 are connected in parallel between an output of the sixth power conversion unit M6 and the output voltage terminal VO. The seventh power conversion unit P7 and the eighth power conversion unit P8 are connected in parallel between an output of the seventh power conversion unit M7 and the output voltage terminal VO.

The second four-stage switched-capacitor power conversion system 3400 is a 16:1 step-down power conversion system. The four operating modes described above are applicable to the second four-stage switched-capacitor power conversion system 3400.

It should be noted the multi-sage switched-capacitor power conversion systems shown Figures 29-34 are merely examples. A person skilled in the art would understand the structures shown Figures 29-34 may be extended further to any other suitable switched-capacitor power conversion systems such as a 32:1 step-down power conversion system.

It should further be noted that by swapping the input port and the output port shown in Figures 29-34, all the step-down switched-capacitor resonant converters proposed herein can be configured as step-up switched-capacitor resonant converters. Furthermore, the operating modes and the associated control methods above can also be adopted with slight modifications for use with the step-up switched-capacitor resonant converters.

The invention is defined by the appended claims. Variations and modifications are possible within the scope of these claims.

**Claims**

1. A system comprising:

a first stage, a second stage, a third stage and a fourth stage connected in cascade between an input voltage (VIN) and an output voltage terminal (VO), the first stage is implemented as a first power conversion unit (M1), the second stage comprises a second conversion unit (M2) and a third power conversion unit (M3), the third stage comprises a fourth power conversion unit (M4), a fifth power conversion unit (M5), a sixth power conversion unit (M6) and a seventh power conversion unit (M7), the fourth stage comprises a first power conversion unit (P1), a second power conversion unit (P2), a third power conversion unit (P3), a fourth power conversion unit (P4), a fifth power conversion unit (P5), a sixth power conversion unit (P6), a seventh power conversion unit (P7) and an eighth power conversion unit (P8);
wherein the first power conversion unit (M1) of the first stage, the second conversion unit (M2) and the third power conversion unit (M3) of the second stage, the fourth power conversion unit (M4) and the fifth power conversion unit (M5) and the sixth power conversion unit (M6) and the seventh power conversion unit (M7) of the third stage each comprises a first switched-capacitor converter (102) including a first switch (Q1), a second switch (Q2), a third switch (Q3) and a fourth switch (Q4) connected in series between an input voltage bus and ground, a flying capacitor (Ci) is connected between a common node of the first and second switches (Q1-Q2) and a common node of the third and fourth switches (Q3-Q4), and an output of each power conversion unit (M1-7) is connected to a common node of the second and third switches (Q2-Q3); and

wherein the first power conversion unit (P1), the second power conversion unit (P2), the third power conversion unit (P3), the fourth power conversion unit (P4), the fifth power conversion unit (P5), the sixth power conversion unit (P6), the seventh power conversion unit (P7) and the eighth power conversion unit (P8) of the fourth stage each comprises a second switched-capacitor converter (104, 114, 116) including a first switch (Q5), a second switch (Q6), a third switch (Q7) and a fourth switch (Q8) connected in series between an input voltage bus and ground, a flying capacitor (Ck) and an inductor (Lk) are connected in series between a common node of the first and second switches (Q5-Q6) and a common node of the third and fourth switches (Q7-Q8), and an output of each power conversion unit (P1-P8) is connected to a common node of the second and third switches (Q6-Q7); and

wherein the inputs of the second conversion unit (M2) and the third power conversion unit (M3) are connected together and further connected to an output of the first power conversion unit (M1);

wherein the inputs of the fourth power conversion unit (M4) and the fifth power conversion unit (M5) are connected together and further connected to an output of the second power conversion unit (M2);

wherein the inputs of the sixth power conversion unit (M6) and the seventh power conversion unit (M7) are connected together and further connected to an output of the third power conversion unit (M3);

wherein the first power conversion unit (P1) and the second power conversion unit (P2) are connected in parallel between an output of the fourth power conversion unit (M4) and the output voltage terminal (VO):

wherein the third power conversion unit (P3) and the fourth power conversion unit (P4) are connected in parallel between an output of the fifth power conversion unit (M5) and the output voltage terminal (VO);
wherein the fifth power conversion unit (P5) and the sixth power conversion unit (P6) are connected in parallel between an output of the sixth power conversion unit (M6) and the output voltage terminal (VO):

wherein the seventh power conversion unit (P7) and the eighth power conversion unit (P8) are connected in parallel between an output of the seventh power conversion unit (M7) and the output voltage terminal (VO); and
wherein each first switched-capacitor converter (102) is configured to operate at a first duty cycle and each second switched-capacitor converter (104, 114, 116) is configured to operate at a second duty cycle,
wherein the first duty cycle is less than the second duty cycle, so that a current (Y1, Y2) flowing through an inductor (L1, L2, Lk) of a power conversion unit (Pk) of the fourth stage has a flat portion for preventing a sum of the currents (Y3) through the inductors (L1, L2, Lk) from having a negative value.

2. The system of claim 1, wherein each of the first switched-capacitor converter (102), and the second switched-capacitor converter (104, 114, 116) is configured as a 2:1 step-down power converter.

3. The system of any one of claims 1-2, wherein the duty cycle of the switches (Q1 - Q4) of the first switched-capacitor converter (102) is less than 50%, and the duty cycle of the switches (Q5 - Q8; Q9 - Q12) of the second switched-capacitor converter (104, 114, 116) is equal to 50%.

4. A method of operating a system, the method comprising a step of providing the system comprising

a first stage, a second stage, a third stage and a fourth stage connected in cascade between an input voltage (VIN) and an output voltage terminal (VO), the first stage is implemented as a first power conversion unit (M1), the second stage comprises a second conversion unit (M2) and a third power conversion unit (M3), the third stage comprises a fourth power conversion unit (M4), a fifth power conversion unit (M5), a sixth power conversion unit (M6) and a seventh power conversion unit (M7), the fourth stage comprises a first power conversion unit (P1), a second power conversion unit (P2), a third power conversion unit (P3), a fourth power conversion unit (P4), a fifth power conversion unit (P5), a sixth power conversion unit (P6), a seventh power conversion unit (P7) and an eighth power conversion unit (P8);
wherein the first power conversion unit (M1) of the first stage, the second conversion unit (M2) and the third power conversion unit (M3) of the second stage, the fourth power conversion unit

(M4) and the fifth power conversion unit (M5) and the sixth power conversion unit (M6) and the seventh power conversion unit (M7) of the third stage each comprises a first switched-capacitor converter (102) including a first switch (Q1), a second switch (Q2), a third switch (Q3) and a fourth switch (Q4) connected in series between an input voltage bus and ground, a flying capacitor (Ci) is connected between a common node of the first and second switches (Q1-Q2) and a common node of the third and fourth switches (Q3-Q4), and an output of each power conversion unit (M1-7) is connected to a common node of the second and third switches (Q2-Q3); and

wherein the first power conversion unit (P1), the second power conversion unit (P2), the third power conversion unit (P3), the fourth power conversion unit (P4), the fifth power conversion unit (P5), the sixth power conversion unit (P6), the seventh power conversion unit (P7) and the eighth power conversion unit (P8) of the fourth stage each comprises a second switched-capacitor converter (104, 114, 116) including a first switch (Q5), a second switch (Q6), a third switch (Q7) and a fourth switch (Q8) connected in series between an input voltage bus and ground, a flying capacitor (Ck) and an inductor (Lk) are connected in series between a common node of the first and second switches (Q5-Q6) and a common node of the third and fourth switches (Q7-Q8), and an output of each power conversion unit (P1-P8) is connected to a common node of the second and third switches (Q6-Q7); wherein the inputs of the second conversion unit (M2) and the third power conversion unit (M3) are connected together and further connected to an output of the first power conversion unit (M1);

wherein the inputs of the fourth power conversion unit (M4) and the fifth power conversion unit (M5) are connected together and further connected to an output of the second power conversion unit (M2);

wherein the inputs of the sixth power conversion unit (M6) and the seventh power conversion unit (M7) are connected together and further connected to an output of the third power conversion unit (M3);

wherein the first power conversion unit (P1) and the second power conversion unit (P2) are connected in parallel between an output of the fourth power conversion unit (M4) and the output voltage terminal (VO):

wherein the third power conversion unit (P3) and the fourth power conversion unit (P4) are connected in parallel between an output of the fifth power conversion unit (M5) and the output voltage terminal (VO);

wherein the fifth power conversion unit (P5) and the sixth power conversion unit (P6) are connected in parallel between an output of the sixth power conversion unit (M6) and the output voltage terminal (VO):

wherein the seventh power conversion unit (P7) and the eighth power conversion unit (P8) are connected in parallel between an output of the seventh power conversion unit (M7) and the output voltage terminal (VO); and wherein the method comprises:

configuring each first switched-capacitor converter (102) to operate at a first duty cycle; and

configuring each second switched-capacitor converter (104, 114, 116) to operate at a second duty cycle, wherein the first duty cycle is less than the second duty cycle, so that a current (Y1, Y2) flowing through an inductor (L1, L2, Lk) of a power conversion unit (Pk) of the fourth stage has a flat portion for preventing a sum of the currents (Y3) through the inductors (L1, L2, Lk) from having a negative value.

**Patentansprüche**

1.  System, umfassend:

eine erste Stufe, eine zweite Stufe, eine dritte Stufe und eine vierte Stufe, die in Kaskade zwischen einem Eingangsspannungs-(VIN) und einem Ausgangsspannungsanschluss (VO) verbunden sind,

wobei die erste Stufe als eine erste Leistungswandlereinheit (M1) implementiert ist, die zweite Stufe eine zweite Wandlereinheit (M2) und eine dritte Leistungswandlereinheit (M3) umfasst, die dritte Stufe eine vierte Leistungswandlereinheit (M4), eine fünfte Leistungswandlereinheit (M5), eine sechste Leistungswandlereinheit (M6) und eine siebte Leistungswandlereinheit (M7) umfasst, die vierte Stufe eine erste Leistungswandlereinheit (P1), eine zweite Leistungswandlereinheit (P2), eine dritte Leistungswandlereinheit (P3), eine vierte Leistungswandlereinheit (P4), eine fünfte Leistungswandlereinheit (P5), eine sechste Leistungswandlereinheit (P6), eine siebte Leistungswandlereinheit (P7) und eine achte Leistungswandlereinheit (P8) umfasst;

wobei die erste Leistungswandlereinheit (M1) der ersten Stufe, die zweite Wandlereinheit (M2) und die dritte Leistungswandlereinheit (M3) der zweiten Stufe, die vierte Leistungswandlereinheit (M4) und die fünfte Leistungswandlereinheit (M5) und die sechste Leistungswandlereinheit (M6) und die siebte Leistungswandlereinheit (M7) der dritten Stufe jeweils einen ersten Wandler (102) mit geschalteten Kondensatoren umfassen, beinhaltend einen ersten Schalter (Q1), einen zweiten Schalter (Q2), einen dritten Schalter (Q3) und einen vierten Schalter (Q4), die in Reihe zwischen einen Eingangsspannungsbus und Masse verbunden sind, wobei ein fliegender Kondensator (Ci) zwischen einen gemeinsamen Knoten des ersten und des zweiten Schalters (Q1-Q2) und einen gemeinsamen Knoten des dritten und des vierten Schalters (Q3-Q4) verbunden ist, und ein Ausgang jeder Leistungswandlereinheit (M1-7) mit einem gemeinsamen Knoten des zweiten und des dritten Schalters (Q2-Q3) verbunden ist; und

wobei die erste Leistungswandlereinheit (P1), die zweite Leistungswandlereinheit (P2), die dritte Leistungswandlereinheit (P3), die vierte Leistungswandlereinheit (P4), die fünfte Leistungswandlereinheit (P5), die sechste Leistungswandlereinheit (P6), die siebte Leistungswandlereinheit (P7) und die achte Leistungswandlereinheit (P8) der vierten Stufe jeweils einen zweiten Wandler (104, 114, 116) mit geschalteten Kondensatoren umfassen, beinhaltend einen ersten Schalter (Q5), einen zweiten Schalter (Q6), einen dritten Schalter (Q7) und einen vierten Schalter (Q8), die in Reihe zwischen einem Eingangsspannungsbus und Masse verbunden sind, wobei ein fliegender Kondensator (Ck) und eine Induktivität (Lk) in Reihe zwischen einem gemeinsamen Knoten des ersten und des zweiten Schalters (Q5-Q6) und einem gemeinsamen Knoten des dritten und des vierten Schalters (Q7-Q8) verbunden sind, und ein Ausgang jeder Leistungswandlereinheit (P1-P8) mit einem gemeinsamen Knoten des zweiten und des dritten Schalters (Q6-Q7) verbunden ist; und

wobei die Eingänge der zweiten Wandlereinheit (M2) und der dritten Leistungswandlereinheit (M3) miteinander verbunden sind und ferner mit einem Ausgang der ersten Leistungswandlereinheit (M1) verbunden sind;

wobei die Eingänge der vierten Leistungswandlereinheit (M4) und der fünften Leistungswandlereinheit (M5) miteinander verbunden sind und ferner mit einem Ausgang der zweiten Leistungswandlereinheit (M2) verbunden sind;

wobei die Eingänge der sechsten Leistungswandlereinheit (M6) und der siebten Leistungswandlereinheit (M7) miteinander verbunden sind und ferner mit einem Ausgang der dritten Leistungswandlereinheit (M3) verbunden sind; wobei die erste Leistungswandlereinheit (P1) und die zweite Leistungswandlereinheit (P2) zwischen einem Ausgang der vierten Leistungswandlereinheit (M4) und dem Ausgangsspannungsanschluss (VO) parallel verbunden sind; wobei die dritte Leistungswandlereinheit (P3) und die vierte Leistungswandlereinheit (P4) zwischen einem Ausgang der fünften Leistungswandlereinheit (M5) und dem Ausgangsspannungsanschluss (VO) parallel verbunden sind; wobei die fünfte Leistungswandlereinheit (P5) und die sechste Leistungswandlereinheit (P6) zwischen einem Ausgang der sechsten Leistungswandlereinheit (M6) und dem Ausgangsspannungsanschluss (VO) parallel verbunden sind; wobei die siebte Leistungswandlereinheit (P7) und die achte Leistungswandlereinheit (P8) zwischen einem Ausgang der siebten Leistungswandlereinheit (M7) und dem Ausgangsspannungsanschluss (VO) parallel verbunden sind; und

wobei jeder erste Wandler (102) mit geschalteten Kondensatoren dazu konfiguriert ist, mit einem ersten Arbeitszyklus zu arbeiten, und jeder zweite Wandler (104, 114, 116) mit geschalteten Kondensatoren dazu konfiguriert ist, mit einem zweiten Arbeitszyklus zu arbeiten, wobei der erste Arbeitszyklus geringer ist als der zweite Arbeitszyklus, sodass ein Strom (Y1, Y2), der durch eine Induktivität (L1, L2, Lk) einer Leistungswandlereinheit (Pk) der vierten Stufe fließt, einen flachen Abschnitt aufweist, um zu verhindern, dass eine Summe der Ströme (Y3) durch die Induktivitäten (L1, L2, Lk) einen negativen Wert aufweist.

2. System gemäß Anspruch 1, wobei jeder von dem ersten Wandler (102) mit geschalteten Kondensatoren und dem zweiten Wandler (104, 114, 116) mit geschalteten Kondensatoren als ein 2:1-Abwärtsleistungswandler konfiguriert ist.

3. System gemäß einem der Ansprüche 1-2, wobei der Arbeitszyklus der Schalter (Q1 - Q4) des ersten Wandlers (102) mit geschalteten Kondensatoren weniger als 50 % beträgt und der Arbeitszyklus der Schalter (Q5 - Q8; Q9 - Q12) des zweiten Wandlers (104, 114, 116) mit geschalteten Kondensatoren gleich 50 % ist.

4. Verfahren zum Betreiben eines Systems, wobei das Verfahren einen Schritt des Bereitstellens des Systems umfasst, umfassend:

eine erste Stufe, eine zweite Stufe, eine dritte Stufe und eine vierte Stufe, die in Kaskade zwischen einem Eingangsspannungs-(VIN) und einem Ausgangsspannungsanschluss (VO) verbunden sind, wobei die erste Stufe als eine erste Leistungswandlereinheit (M1) implementiert ist, die zweite Stufe eine zweite Wandlereinheit (M2) und eine dritte Leistungswandlereinheit (M3) umfasst, die dritte Stufe eine vierte Leistungswandlereinheit (M4), eine fünfte Leistungswandlereinheit (M5), eine sechste Leistungswandlereinheit (M6) und eine siebte Leistungswandlereinheit (M7) umfasst, die vierte Stufe eine erste Leistungswandlereinheit (P1), eine zweite Leistungswandlereinheit (P2), eine dritte Leistungswandlereinheit (P3), eine vierte Leistungswandlereinheit (P4), eine fünfte Leistungswandlereinheit (P5), eine sechste Leistungswandlereinheit (P6), eine siebte Leistungswandlereinheit (P7) und eine achte Leistungswandlereinheit (P8) umfasst;

wobei die erste Leistungswandlereinheit (M1) der ersten Stufe, die zweite Wandlereinheit (M2) und die dritte Leistungswandlereinheit (M3) der zweiten Stufe, die vierte Leistungswandlereinheit (M4) und die fünfte Leistungswandlereinheit (M5) und die sechste Leistungswandlereinheit (M6) und die siebte Leistungswandlereinheit (M7) der dritten Stufe jeweils einen ersten Wandler (102) mit geschalteten Kondensatoren umfassen, beinhaltend einen ersten Schalter (Q1), einen zweiten Schalter (Q2), einen dritten Schalter (Q3) und einen vierten Schalter (Q4), die in Reihe zwischen einen Eingangsspannungsbus und Masse verbunden sind, wobei ein fliegender Kondensator (Ci) zwischen einen gemeinsamen Knoten des ersten und des zweiten Schalters (Q1-Q2) und einen gemeinsamen Knoten des dritten und des vierten Schalters (Q3-Q4) verbunden ist, und ein Ausgang jeder Leistungswandlereinheit (M1-7) mit einem gemeinsamen Knoten des zweiten und des dritten Schalters (Q2-Q3) verbunden ist; und

wobei die erste Leistungswandlereinheit (P1), die zweite Leistungswandlereinheit (P2), die dritte Leistungswandlereinheit (P3), die vierte Leistungswandlereinheit (P4), die fünfte Leistungswandlereinheit (P5), die sechste Leistungswandlereinheit (P6), die siebte Leistungswandlereinheit (P7) und die achte Leistungswandlereinheit (P8) der vierten Stufe jeweils einen zweiten Wandler (104, 114, 116) mit geschalteten Kondensatoren umfassen, beinhaltend einen ersten Schalter (Q5), einen zweiten Schalter (Q6), einen dritten Schalter (Q7) und einen vierten Schalter (Q8), die in Reihe zwischen einem Eingangsspannungsbus und Masse verbunden sind, wobei ein fliegender Kondensator (Ck) und eine Induktivität (Lk) in Reihe zwischen einem gemeinsamen Knoten des ersten und des zweiten Schalters (Q5-Q6) und einem gemeinsamen Knoten des dritten und des vierten Schalters (Q7-Q8) verbunden sind, und ein Ausgang jeder Leistungswandlereinheit (P1-P8) mit einem gemeinsamen Knoten des zweiten und des dritten Schalters (Q6-Q7) verbunden ist;

wobei die Eingänge der zweiten Wandlereinheit (M2) und der dritten Leistungswandlereinheit (M3) miteinander verbunden sind und ferner mit einem Ausgang der ersten Leistungswandlereinheit (M1) verbunden sind;

wobei die Eingänge der vierten Leistungswandlereinheit (M4) und der fünften Leistungswandlereinheit (M5) miteinander verbunden sind und ferner mit einem Ausgang der zweiten Leistungswandlereinheit (M2) verbunden sind;

wobei die Eingänge der sechsten Leistungswandlereinheit (M6) und der siebten Leistungswandlereinheit (M7) miteinander verbunden sind und ferner mit einem Ausgang der dritten Leistungswandlereinheit (M3) verbunden sind;

wobei die erste Leistungswandlereinheit (P1) und die zweite Leistungswandlereinheit (P2) zwischen einem Ausgang der vierten Leistungswandlereinheit (M4) und dem Ausgangsspannungsanschluss (VO) parallel verbunden sind;

wobei die dritte Leistungswandlereinheit (P3) und die vierte Leistungswandlereinheit (P4) zwischen einem Ausgang der fünften Leistungswandlereinheit (M5) und dem Ausgangsspannungsanschluss (VO) parallel verbunden sind;

wobei die fünfte Leistungswandlereinheit (P5) und die sechste Leistungswandlereinheit (P6) zwischen einem Ausgang der sechsten Leistungswandlereinheit (M6) und dem Ausgangsspannungsanschluss (VO) parallel verbunden sind;

wobei die siebte Leistungswandlereinheit (P7) und die achte Leistungswandlereinheit (P8) zwischen einem Ausgang der siebten Leistungswandlereinheit (M7) und dem Ausgangsspannungsanschluss (VO) parallel verbunden sind; und

wobei das Verfahren umfasst:

Konfigurieren jedes ersten Wandlers (102) mit geschalteten Kondensatoren, um mit einem ersten Arbeitszyklus zu arbeiten; und Konfigurieren jedes zweiten Wandlers (104, 114, 116) mit geschalteten Kondensatoren, um mit einem zweiten Arbeitszyklus zu arbeiten, wobei der erste Arbeitszyklus geringer ist als der zweite Arbeitszyklus, sodass ein Strom (Y1, Y2), der durch eine Induktivität (L1, L2, Lk) einer Leistungswandlereinheit (Pk) der vierten Stufe fließt, einen flachen Abschnitt aufweist, um zu verhindern, dass eine Summe der Ströme (Y3) durch die Induktivitäten (L1, L2, Lk) einen negativen Wert aufweist.

**Revendications**

1. Système comprenant :

un premier étage, un deuxième étage, un troisième étage et un quatrième étage connectés en cascade entre une tension d'entrée (VIN) et une borne de tension de sortie (VO), le premier étage est mis en œuvre comme une première unité de conversion de puissance (M1), le deuxième étage comprend une deuxième unité de conversion (M2) et une troisième unité de conversion de puissance (M3), le troisième étage comprend une quatrième unité de conversion de puissance (M4), une cinquième unité de conversion de puissance (M5), une sixième unité de conversion de puissance (M6) et une septième unité de conversion de puissance (M7), le quatrième étage comprend une première unité de conversion de puissance (P1), une deuxième unité de conversion de puissance (P2), une troisième unité de conversion de puissance (P3), une quatrième unité de conversion de puissance (P4), une cinquième unité de conversion de puissance (P5), une sixième unité de conversion de puissance (P6), une septième unité de conversion de puissance (P7) et une huitième unité de conversion de puissance (P8) ;
dans lequel la première unité de conversion de puissance (M1) du premier étage, la deuxième unité de conversion (M2) et la troisième unité de conversion de puissance (M3) du deuxième étage, la quatrième unité de conversion de puissance (M4) et la cinquième unité de conversion de puissance (M5) et la sixième unité de conversion de puissance (M6) et la septième unité de conversion de puissance (M7) du troisième étage comprennent chacune un premier convertisseur à condensateur commuté (102) comportant un premier commutateur (Q1), un deuxième commutateur (Q2), un troisième commutateur (Q3) et un quatrième commutateur (Q4) connectés en série entre un bus de tension d'entrée et la masse, un condensateur volant (Ci) est connecté entre un noeud commun des premier et deuxième commutateurs (Q1-Q2) et un noeud commun des troisième et quatrième commutateurs (Q3-Q4), et une sortie de chaque unité de conversion de puissance (M1-7) est connectée à un noeud commun des deuxième et troisième commutateurs (Q2-Q3) ; et
dans lequel la première unité de conversion de puissance (P1), la deuxième unité de conversion de puissance (P2), la troisième unité de conversion de puissance (P3), la quatrième unité de conversion de puissance (P4), la cinquième unité de conversion de puissance (P5), la sixième unité de conversion de puissance (P6), la septième unité de conversion de puissance (P7) et la huitième unité de conversion de puissance (P8) du quatrième étage comprennent chacune un second convertisseur à condensateur commuté (104, 114, 116) comportant un premier commutateur (Q5), un deuxième commutateur (Q6), un troisième commutateur (Q7) et un quatrième commutateur (Q8) connectés en série entre un bus de tension d'entrée et la masse, un condensateur volant (Ck) et un inducteur (Lk) sont connectés en série entre un noeud commun des premier et deuxième commutateurs (Q5-Q6) et un noeud commun des troisième et quatrième commutateurs (Q7-Q8), et une sortie de chaque unité de conversion de puissance (P1-P8) est connectée à un noeud commun des deuxième et troisième commutateurs (Q6-Q7) ; et
dans lequel les entrées de la deuxième unité de conversion (M2) et de la troisième unité de conversion de puissance (M3) sont connectées ensemble et en outre connectées à une sortie de la première unité de conversion de puissance (M1) ;
dans lequel les entrées de la quatrième unité de conversion de puissance (M4) et de la cinquième unité de conversion de puissance (M5) sont connectées ensemble et en outre connectées à une sortie de la deuxième unité de conversion de puissance (M2) ;
dans lequel les entrées de la sixième unité de conversion de puissance (M6) et de la septième unité de conversion de puissance (M7) sont connectées ensemble et en outre connectées à une sortie de la troisième unité de conversion de puissance (M3) ;
dans lequel la première unité de conversion de puissance (P1) et la deuxième unité de conversion de puissance (P2) sont connectées en parallèle entre une sortie de la quatrième unité de conversion de puissance (M4) et la borne de tension de sortie (VO) ;
dans lequel la troisième unité de conversion de puissance (P3) et la quatrième unité de conversion de puissance (P4) sont connectées en parallèle entre une sortie de la cinquième unité de conversion de puissance (M5) et la borne de tension de sortie (VO) ;
dans lequel la cinquième unité de conversion de puissance (P5) et la sixième unité de conversion de puissance (P6) sont connectées en parallèle entre une sortie de la sixième unité de conversion de puissance (M6) et la borne de tension de sortie (VO) ;

dans lequel la septième unité de conversion de puissance (P7) et la huitième unité de conversion de puissance (P8) sont connectées en parallèle entre une sortie de la septième unité de conversion de puissance (M7) et la borne de tension de sortie (VO) ; et

dans lequel chaque premier convertisseur à condensateur commuté (102) est configuré pour fonctionner selon un premier rapport cyclique et chaque second convertisseur à condensateur commuté (104, 114, 116) est configuré pour fonctionner selon un second rapport cyclique, dans lequel le premier rapport cyclique est inférieur au second rapport cyclique, de sorte qu'un courant (Y1, Y2) circulant à travers un inducteur (L1, L2, Lk) d'une unité de conversion de puissance (Pk) du quatrième étage présente une partie plate pour empêcher une somme des courants (Y3) circulant à travers les inducteurs (L1, L2, Lk) de présenter une valeur négative.

**2.** Système selon la revendication 1, dans lequel chacun du premier convertisseur à condensateur commuté (102) et du second convertisseur à condensateur commuté (104, 114, 116) est configuré comme un convertisseur de puissance abaisseur 2:1.

**3.** Système selon l'une quelconque des revendications 1 et 2, dans lequel le rapport cyclique des commutateurs (Q1-Q4) du premier convertisseur à condensateur commuté (102) est inférieur à 50 %, et le rapport cyclique des commutateurs (Q5-Q8 ; Q9-Q12) du second convertisseur à condensateur commuté (104, 114, 116) est égal à 50 %.

**4.** Procédé de fonctionnement d'un système, le procédé comprenant une étape de fourniture du système comprenant :

un premier étage, un deuxième étage, un troisième étage et un quatrième étage connectés en cascade entre une tension d'entrée (VIN) et une borne de tension de sortie (VO), le premier étage est mis en œuvre comme une première unité de conversion de puissance (M1), le deuxième étage comprend une deuxième unité de conversion (M2) et une troisième unité de conversion de puissance (M3), le troisième étage comprend une quatrième unité de conversion de puissance (M4), une cinquième unité de conversion de puissance (M5), une sixième unité de conversion de puissance (M6) et une septième unité de conversion de puissance (M7), le quatrième étage comprend une première unité de conversion de puissance (P1), une deuxième unité de conversion de puissance (P2), une troisième unité de conversion de puissance (P3), une quatrième unité de conversion de puissance (P4), une cinquième unité de conversion de puissance (P5), une sixième unité de conversion de puissance (P6), une septième unité de conversion de puissance (P7) et une huitième unité de conversion de puissance (P8) ;

dans lequel la première unité de conversion de puissance (M1) du premier étage, la deuxième unité de conversion (M2) et la troisième unité de conversion de puissance (M3) du deuxième étage, la quatrième unité de conversion de puissance (M4) et la cinquième unité de conversion de puissance (M5) et la sixième unité de conversion de puissance (M6) et la septième unité de conversion de puissance (M7) du troisième étage comprennent chacune un premier convertisseur à condensateur commuté (102) comportant un premier commutateur (Q1), un deuxième commutateur (Q2), un troisième commutateur (Q3) et un quatrième commutateur (Q4) connectés en série entre un bus de tension d'entrée et la masse, un condensateur volant (Ci) est connecté entre un noeud commun des premier et deuxième commutateurs (Q1-Q2) et un noeud commun des troisième et quatrième commutateurs (Q3-Q4), et une sortie de chaque unité de conversion de puissance (M1-7) est connectée à un noeud commun des deuxième et troisième commutateurs (Q2-Q3) ; et

dans lequel la première unité de conversion de puissance (P1), la deuxième unité de conversion de puissance (P2), la troisième unité de conversion de puissance (P3), la quatrième unité de conversion de puissance (P4), la cinquième unité de conversion de puissance (P5), la sixième unité de conversion de puissance (P6), la septième unité de conversion de puissance (P7) et la huitième unité de conversion de puissance (P8) du quatrième étage comprennent chacune un second convertisseur à condensateur commuté (104, 114, 116) comportant un premier commutateur (Q5), un deuxième commutateur (Q6), un troisième commutateur (Q7) et un quatrième commutateur (Q8) connectés en série entre un bus de tension d'entrée et la masse, un condensateur volant (Ck) et un inducteur (Lk) sont connectés en série entre un noeud commun des premier et deuxième commutateurs (Q5-Q6) et un noeud commun des troisième et quatrième commutateurs (Q7-Q8), et une sortie de chaque unité de conversion de puissance (P1-P8) est connectée à un noeud commun des deuxième et troisième commutateurs (Q6-Q7) ;

dans lequel les entrées de la deuxième unité de conversion (M2) et de la troisième unité de conversion de puissance (M3) sont connectées ensemble et en outre connectées à une sortie de la première unité de conversion de puissance (M1) ;

dans lequel les entrées de la quatrième unité de conversion de puissance (M4) et de la cinquième unité de conversion de puissance (M5) sont connectées ensemble et en outre connectées à une sortie de la deuxième unité de conversion de puissance (M2) ;

dans lequel les entrées de la sixième unité de conversion de puissance (M6) et de la septième unité de conversion de puissance (M7) sont connectées ensemble et en outre connectées à une sortie de la troisième unité de conversion de puissance (M3) ;

dans lequel la première unité de conversion de puissance (P1) et la deuxième unité de conversion de puissance (P2) sont connectées en parallèle entre une sortie de la quatrième unité de conversion de puissance (M4) et la borne de tension de sortie (VO) ;

dans lequel la troisième unité de conversion de puissance (P3) et la quatrième unité de conversion de puissance (P4) sont connectées en parallèle entre une sortie de la cinquième unité de conversion de puissance (M5) et la borne de tension de sortie (VO) ;

dans lequel la cinquième unité de conversion de puissance (P5) et la sixième unité de conversion de puissance (P6) sont connectées en parallèle entre une sortie de la sixième unité de conversion de puissance (M6) et la borne de tension de sortie (VO) ;

dans lequel la septième unité de conversion de puissance (P7) et la huitième unité de conversion de puissance (P8) sont connectées en parallèle entre une sortie de la septième unité de conversion de puissance (M7) et la borne de tension de sortie (VO) ; et dans lequel le procédé comprend :

la configuration de chaque premier convertisseur à condensateur commuté (102) afin qu'il fonctionne selon un premier rapport cyclique ; et

la configuration de chaque second convertisseur à condensateur commuté (104, 114, 116) afin qu'il fonctionne selon un second rapport cyclique,

dans lequel le premier rapport cyclique est inférieur au second rapport cyclique, de sorte qu'un courant (Y1, Y2) circulant à travers un inducteur (L1, L2, Lk) d'une unité de conversion de puissance (Pk) du quatrième étage présente une partie plate pour empêcher une somme des courants (Y3) circulant à travers les inducteurs (L1, L2, Lk) de présenter une valeur négative.

FIG. 1

FIG. 2

104

VO1

Q5

Q6

C2

L1

VO3

Q7

Q8

VO2

VO4

FIG. 3

106

VO1

Q9

Q10

C3

L2

VO3

Q11

Q12

VO2

VO4

FIG. 4

FIG. 5

EP 4 022 756 B1

FIG. 6

EP 4 022 756 B1

FIG. 7

FIG. 8

FIG. 9

FIG. 10

FIG. 11

FIG. 12

FIG. 13

FIG. 14

FIG. 15

FIG. 16

FIG. 17

TIME (us), 2uS/div

| | | | | | | | |
|---|---|---|---|---|---|---|---|
| | 602 | 604 | 606 | 608 | 610 | 612 | 614 |

Y1 Vgs(Q1,Q3) 6 / 0

Y2 Vgs(Q2,Q4) 6 / 0

Y3 i(L1)/A 50 / 0

Y4 i(L2)/A 50 / 0

Y5 i(L1)+i(L2)/A 100 / 0

Y6 v(C1) 24.2 / 23.6

Y7 v(C2) 13 / 8

Y8 v(C3) 13 / 8

Y9 Vo/V 10 / 0

38

Y1  Vgs(Q1,Q3)

Y2  Vgs(Q2,Q4)

Y3  i(L1)/A

Y4  i(L2)/A

Y5  i(L1)+i(L2)/A

Y6  Vo/V

TIME (us), 2uS/div

FIG. 18

200

102

114

116

VIN1    SCC    VO1    SCC    VO3

VIN2    VO2    SCC    VO4

**FIG. 19**

114

VO1

Q5

C2

Q6    VO3

Q7

L1

Q8

VO2    VO4

**FIG. 20**

116

VO1

Q9

C3

Q10    VO3

Q11

L2

Q12

VO2    VO4

**FIG. 21**

FIG. 22

FIG. 23

EP 4 022 756 B1

Y1    i(L1)/A

Y2    i(L2)/A

Y3    i(L1)+i(L2)/A

TIME (ms), 1uS/div

FIG. 24

FIG. 25

FIG. 26

FIG. 27

FIG. 28

FIG. 29

FIG. 30

FIG. 31

FIG. 32

3300

FIG. 33

FIG. 34

**REFERENCES CITED IN THE DESCRIPTION**

**Patent documents cited in the description**

- US 6480403 B1
- US 20170244318 A1
- US 20160197552 A1
- US 20180026518 A1